(19) **Europäisches Patentamt / European Patent Office / Office européen des brevets**

(11) **EP 4 663 294 A1**

(12) **EUROPEAN PATENT APPLICATION**
published in accordance with Art. 153(4) EPC

(43) Date of publication:
**17.12.2025  Bulletin 2025/51**

(21) Application number: **23925400.6**

(22) Date of filing: **11.12.2023**

(51) International Patent Classification (IPC):
**B01J 35/57** (2024.01)     **B01D 53/94** (2006.01)
**B01J 23/63** (2006.01)     **F01N 3/10** (2006.01)
**F01N 3/28** (2006.01)

(52) Cooperative Patent Classification (CPC):
**B01D 53/94; B01J 23/63; B01J 35/57; F01N 3/10; F01N 3/28**

(86) International application number:
**PCT/JP2023/044135**

(87) International publication number:
**WO 2024/180848 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **01.03.2023   JP 2023031266**

(71) Applicant: **CATALER CORPORATION**
**Kakegawa-shi, Shizuoka 437-1492 (JP)**

(72) Inventors:
• **ONOE, Ryota**
  **Kakegawa-shi, Shizuoka 437-1492 (JP)**
• **TAKASU, Ryosuke**
  **Kakegawa-shi, Shizuoka 437-1492 (JP)**
• **FUJITA, Nozomi**
  **Kakegawa-shi, Shizuoka 437-1492 (JP)**
• **SHIRAYAMA, Yodai**
  **Kakegawa-shi, Shizuoka 437-1492 (JP)**
• **ITO, Masaya**
  **Kakegawa-shi, Shizuoka 437-1492 (JP)**

(74) Representative: **Kramer Barske Schmidtchen**
**Patentanwälte PartG mbB**
**European Patent Attorneys**
**Landsberger Strasse 300**
**80687 München (DE)**

(54) **EXHAUST GAS PURIFICATION CATALYST**

(57)    An exhaust gas purification catalyst disclosed herein includes a catalyst layer 20 including a lower catalyst layer 22 and an upper catalyst layer 24. A lower-layer front portion A is provided on the upstream side of the lower catalyst layer 22, and a lower-layer rear portion B is provided on the downstream side of the lower catalyst layer 22. Further, an upper-layer front portion C is provided on the upstream side of the upper catalyst layer 24, and an upper-layer rear portion D is provided on the downstream side of the upper catalyst layer 24. The lower-layer front portion A, the lower-layer rear portion B, the upper-layer front portion C, and the upper-layer rear portion D each have individually set types of catalyst metal. As a result, it is possible to exhibit adequate purification performance according to an operation state of an internal combustion engine. Furthermore, from the viewpoint of achieving both exhaust gas purification performance and suppression of pressure loss, a lower-layer lap portion 25 and an upper-layer lap portion 27 are formed so as not to overlap in the cylinder axis direction X. This makes it possible to provide an exhaust gas purification catalyst that can exhibit adequate purification performance according to an operation state of the internal combustion engine.

FIG.4

## Description

### Technical Field

The technique disclosed herein relates to an exhaust gas purification catalyst. This international application claims priority based on Japanese Patent Application No. 2023-31266 filed on March 1, 2023, the entire contents of which are incorporated herein by reference.

### Background Art

Exhaust gas discharged from an internal combustion engine such as an automobile engine includes harmful components such as hydrocarbons (HC), carbon monoxide (CO), and nitrogen oxides ($NO_x$). For this reason, an exhaust gas purification catalyst that purifies the harmful components is disposed in the exhaust path connected to the internal combustion engine. This exhaust gas purification catalyst includes a substrate and a catalyst layer formed on the surface of the substrate. The catalyst layer includes, for example, a catalytic metal and an OSC (Oxygen Storage Capacity) material. The catalytic metal is a precious metal material that promotes the oxidation (or reduction) of the harmful components. In addition, for example, $CeO_2$ is used as the OSC material. This $CeO_2$ stores oxygen while exhaust gas in a lean state (excessive oxygen) is being supplied, and releases oxygen when exhaust gas in a rich state (insufficient oxygen) is being supplied. This allows the exhaust gas to be purified stably even if the air-fuel ratio of the exhaust gas fluctuates.

In recent years, in the field of exhaust gas purification catalysts, it has been proposed to form on the surface of a substrate a plurality of catalyst layers with different compositions. For example, the exhaust gas purification catalyst described in Patent Literature 1 has four types of catalyst layers of an upstream lower coat layer, an upstream upper coat layer, a downstream lower coat layer, and a downstream upper coat layer. In the exhaust gas purification catalyst described in Patent Literature 1, the concentrations of catalytic metals (Pt, Pd, Rh) in each layer are made different. This allows to achieve a high degree of HC purification ability in a high-temperature environment and a high degree of $NO_X$ purification ability in a low-temperature environment. Furthermore, Patent Literature 2 discloses another example of an exhaust gas purification catalyst. In the exhaust gas purification catalyst described in Patent Literature 2, an OSC material is added to each of the plurality of catalyst layers.

Citation List

Patent Literature

[0004]

　　Patent Literature 1: Japanese Patent No. 7061655
　　Patent Literature 2: US Patent Application Publication No. 2010/0104491

### Summary of Invention

Technical Problem

Incidentally, various factors (temperature, flow velocity, air-fuel ratio, etc.) of exhaust gas discharged from an internal combustion engine change depending on the operation state of the internal combustion engine. For example, during warm-up operation immediately after starting, low-temperature, low-velocity exhaust gas is discharged. Meanwhile, during high-speed operation, high-temperature, high-velocity exhaust gas is discharged. In addition, a general exhaust gas purification catalyst is required to have high purification performance not only in special situations such as warm-up operation and high-speed operation, but also in normal operation. For this reason, if an exhaust gas purification catalyst is designed with a focus only on a specific situation (e.g., warm-up operation), there is a concern that the emission of harmful components increases when the operation state of the internal combustion engine changes.

The technique disclosed herein has been created to solve the above-mentioned problems and aims to provide an exhaust gas purification catalyst that can exhibit suitable purification performance in various operation states.

Solution to Problem

To solve the above-mentioned problems, the technique disclosed herein provides an exhaust gas purification catalyst having the following configuration.

The exhaust gas purification catalyst (1) disclosed herein is placed in the exhaust path connected to an internal combustion engine and purifies exhaust gas discharged from the internal combustion engine. Such an exhaust gas purification catalyst includes a cylindrical substrate having a plurality of cells and a partition wall separating the plurality of cells, and a catalyst layer that is a porous layer provided on the surface of the partition wall and has a catalytic metal. The catalyst layer has a stacked structure of at least two layers, with the lower catalyst layer being closer to the surface of the partition wall and the upper catalyst layer being relatively farther from the surface of the partition wall. This lower catalyst layer has a lower-layer front portion A that extends from the upstream end of the substrate in an exhaust gas flow direction toward the downstream side and contains Pd as a catalytic metal, a lower-layer rear portion B that extends from the downstream end of the substrate in the exhaust gas flow direction toward the upstream side and contains at least one of Pd and Pt as a catalytic metal, and a lower-layer lap portion in which the lower-layer front portion A and the lower-layer rear portion B are stacked. Furthermore, the upper catalyst layer includes an upper-layer front portion C that extends from the upstream end of the substrate in the exhaust gas flow direction toward the downstream side and contains Rh as a catalytic metal, an upper-layer rear portion D that extends from the downstream end of the substrate in the exhaust gas flow direction toward the upstream side and contains Rh as a catalytic metal, and an upper-layer lap portion in which the upper-layer front portion C and the upper-layer rear portion D are stacked. In the exhaust gas purification catalyst disclosed herein, the formation position of the lower-layer lap portion and the formation position of the upper-layer lap portion do not overlap in the cylinder axis direction of the substrate.

As described above, the exhaust gas purification catalyst disclosed herein has four types of catalyst layers (lower-layer front portion A, lower-layer rear portion B, upper-layer front portion C, and upper-layer rear portion D) that differ in the type of catalytic metal. This allows the catalyst to exhibit suitable purification performance in various operation states. A specific explanation will be given below.

First, the lower-layer front portion A is a region that suitably purifies exhaust gas during warm-up operation immediately after starting operation. Specifically, at the start of operation, most of the catalytic metal is oxidized, and catalytic activity is reduced. Then, where warm-up operation is started, oxygen is gradually dissociated from the catalytic metal as the exhaust gas temperature rises, and the purification performance increases (recovers). The exhaust gas during this warm-up operation has a very low flow velocity, so it easily permeates to the upstream side (lower-layer front portion A) of the lower catalyst layer. In light of this point, the exhaust gas purification catalyst disclosed herein uses Pd as the catalytic metal of the lower-layer front portion A. Pd has better catalytic activity in an oxidized state than other catalytic metals. With these features, the lower-layer front portion A can reduce the emission of harmful components during warm-up operation.

Next, the lower-layer rear portion B is a region to which exhaust gas during warm-up operation is likely to be supplied, next to the lower-layer front portion A. In addition, the lower-layer rear portion B is also a region to which components (substances generated in the catalyst) generated in other regions are likely to be supplied. In consideration of these points, the lower-layer rear portion B contains at least one of Pd and Pt as a catalytic metal. For example, by disposing Pd in the lower-layer rear portion B, it is possible to exhibit suitable purification performance even during warm-up operation. In addition, Pt can suitably purify substances generated in the catalyst. Since exhaust gases produced in various states can be supplied to the lower-layer rear portion B, it is preferable that the lower-layer rear portion B contain at least one of these catalytic metals.

Next, the upper-layer front portion C is a region intended to promote $NO_X$ purification in various states, including normal operation. First, inside the exhaust gas purification catalyst, the water-gas shift reaction shown in formula (1) occurs and hydrogen gas ($H_2$) is generated. This hydrogen gas is then used as a reducing agent in the $NO_X$ purification reaction shown in formula (2). In other words, in order to purify $NO_X$ inside the exhaust gas purification catalyst, it is necessary to cause adequately the reactions shown in the following formulas (1) and (2).

$$CO + H_2O \rightarrow CO_2 + H_2 \qquad (1)$$

$$NO_X + H_2 \rightarrow N_2 + H_2O \qquad (2)$$

Here, the upper-layer front portion C located on the upstream side of the upper catalyst layer is the region that first comes into contact with the exhaust gas. Therefore, where the water-gas shift reaction adequately occurs in the upper-layer front portion C, the $NO_X$ purification reaction is likely to occur in other regions. From this viewpoint, the upper-layer front portion C includes Rh, which is excellent at promoting the water-gas shift reaction.

Next, the upper-layer rear portion D is a region for purifying exhaust gas emitted during high-speed operation. Specifically, exhaust gas during high-speed operation has a very high flow velocity, so it hardly permeates into the lower catalyst layer and mainly permeates into the upper catalyst layer (especially the upper-layer rear portion D). In this case, there is a risk that harmful components will not be sufficiently purified because there is less opportunity for contact between the exhaust gas and the catalyst layer. To resolve this problem, the upper-layer rear portion D includes Rh as a catalytic metal. Rh has excellent three-way performance, so it can suitably purify exhaust gas during high-speed operation with a high flow velocity of exhaust gas.

The catalyst layer of the exhaust gas purification catalyst disclosed herein is provided with a lower-layer lap portion and an upper-layer lap portion. The amount of catalytic metal present in these lap portions is greater than in other regions. Therefore, by stacking the lower-layer front portion A and the lower-layer rear portion B (or the upper-layer front portion C and the upper-layer rear portion D) so as to produce the lower-layer lap portion (or the upper-layer lap portion), the exhaust gas purification performance can be further improved.

Meanwhile, the thickness of the catalyst layer is greater in the lap portions than in other parts. Where the lower-layer lap portion and the upper-layer lap portion are formed at the same position in the cylinder axis direction of the substrate, the thickness of the catalyst layer increases locally. Such a local increase in the thickness of the catalyst layer can cause an increase in pressure loss due to cell clogging. In response to this, in the exhaust gas purification catalyst disclosed herein, the formation regions of the lower-layer front portion A to the upper-layer rear portion D are set so that the formation position of the lower-layer lap portion and the formation position of the upper-layer lap portion do not overlap in the cylinder axis direction of the substrate. This makes it possible to prevent cell clogging caused by overlapping of the lap portions.

In the exhaust gas purification catalyst (2) disclosed herein, where the entire length of the partition wall in the cylinder axis direction in the exhaust gas purification catalyst (1) is taken as 100%, the center of the upper-layer lap portion is located at a position 40% to 70% from the upstream end of the substrate. This can further improve the exhaust gas purification performance during high-speed operation.

In the exhaust gas purification catalyst (3) disclosed herein, where the entire length of the partition wall in the cylinder axis direction in the exhaust gas purification catalyst (1) or (2) is taken as 100%, the center of the lower-layer lap portion is located at a position 35% to 50% from the upstream end of the substrate. This can further improve the exhaust gas purification performance during warm-up operation.

In the exhaust gas purification catalyst (4) disclosed herein, where the entire length of the partition wall in the cylinder axis direction in any one of the exhaust gas purification catalysts (1) to (3) is taken as 100%, the length $L_A$ of the lower-layer front portion A is 45% to 55%. This makes it possible to more suitably improve the exhaust gas purification performance during warm-up operation.

In the exhaust gas purification catalyst (5) disclosed herein, where the entire length of the partition wall in the cylinder axis direction in any one of the exhaust gas purification catalysts (1) to (4) is taken as 100%, the length $L_B$ of the lower-layer rear portion B is 65% to 75%. This makes it possible to improve the purification performance during warm-up operation and the purification performance against substances generated within the catalyst.

In the exhaust gas purification catalyst (6) disclosed herein, where the entire length of the partition wall in the cylinder axis direction in any one of the exhaust gas purification catalysts (1) to (5) is taken as 100%, the length $L_C$ of the upper-layer front portion C is 50% to 80%. This makes it possible to more suitably promote the water-gas shift reaction.

In the exhaust gas purification catalyst (7) disclosed herein, where the entire length of the partition wall in the cylinder axis direction in any one of the exhaust gas purification catalysts (1) to (6) is taken as 100%, the length $L_D$ of the upper-layer rear portion D is 40% to 70%. This makes it possible to further improve the exhaust gas purification performance during high-speed operation.

In the exhaust gas purification catalyst (8) disclosed herein, the catalyst layer in any one of the exhaust gas purification catalysts (1) to (7) further has an OSC material including $CeO_2$. This provides the catalyst layer with oxygen storage capacity, so the performance of the catalytic metal can be stably exhibited.

In the exhaust gas purification catalyst (9) disclosed herein, the OSC material in the exhaust gas purification catalyst (8) is a $CeO_2$-$ZrO_2$ composite oxide. This suppresses sintering of $CeO_2$, making it possible to exhibit more suitable oxygen storage capacity.

In the exhaust gas purification catalyst (10) disclosed herein, the $CeO_2$ content $A_{CeO2}$ in the lower-layer front portion A in the exhaust gas purification catalyst (8) or (9) is 0 g/L to 15 g/L. During warm-up operation at the start of operation, the OSC material ($CeO_2$) stores a large amount of oxygen. Therefore, where a large amount of $CeO_2$ is present in the lower-layer front portion A, the supply of oxygen from $CeO_2$ to the catalytic metal inhibits the performance recovery of the catalytic metal due to oxygen desorption. Considering this point, the $CeO_2$ content $A_{CeO2}$ in the lower-layer front portion A is preferably 15 g/L or less.

In the exhaust gas purification catalyst (11) disclosed herein, the $CeO_2$ content $B_{CeO2}$ in the lower-layer rear portion B in any one of the exhaust gas purification catalysts (8) to (10) is 20 g/L to 63 g/L. As described above, the lower-layer rear portion B is located on the downstream side of the lower catalyst layer, so exhaust gases produced in various states are supplied thereto. Therefore, where a large amount of $CeO_2$ is present in the lower-layer rear portion B, it is easier to respond to fluctuations in the air-fuel ratio that may occur during the operation of the internal combustion engine. From this viewpoint, the $CeO_2$ content $B_{CeO2}$ in the lower-layer rear portion B is set to 20 g/L or more. This makes it possible to reduce the emissions of harmful components due to fluctuations in the air-fuel ratio. In order to ensure that the addition amount of other components that form the catalyst layer is at a certain level or higher, the upper limit of the $CeO_2$ content $B_{CeO2}$ in the lower-layer rear portion B is set to 63 g/L or less.

In the exhaust gas purification catalyst (12) disclosed herein, the $CeO_2$ content $C_{CeO2}$ in the upper-layer front portion C in any one of the exhaust gas purification catalysts (8) to (11) is 1 g/L to 8 g/L. As described above, in the exhaust gas purification catalyst disclosed herein, Rh is added to the upper-layer front portion C to promote the water-gas shift reaction. However, Rh has a problem in that the catalytic activity thereof is greatly reduced upon oxidation. In response to this, in the exhaust gas purification catalyst disclosed herein, the $CeO_2$ content $C_{CeO2}$ in the upper-layer front portion C is set to 7 g/L or less. This can promote the recovery of the catalytic activity of Rh during warm-up operation, so that $NO_X$ can be suitably purified during warm-up operation. Where the $CeO_2$ content $C_{CeO2}$ in the upper-layer front portion C becomes too small, it will not be able to follow the fluctuations in the air-fuel ratio, and there is a risk that $NO_X$ emissions during warm-up will not be reduced even if the catalytic activity is fully recovered. For this reason, in the technique disclosed herein, the lower limit of the $CeO_2$ content $C_{CeO2}$ in the upper-layer front portion C is set to 1 g/L or more.

In the exhaust gas purification catalyst (13) disclosed herein, the $CeO_2$ content $D_{CeO2}$ in the upper-layer rear portion D in any one of the exhaust gas purification catalysts (8) to (12) is 1 g/L to 8 g/L. As described above, in the exhaust gas purification catalyst disclosed herein, Rh is added to the upper-layer rear portion C to improve purification performance during high-speed operation. However, Rh may form a solid solution in $CeO_2$, which may significantly reduce the catalytic performance. In particular, the exhaust gas during high-speed operation has a very high temperature, which promotes the formation of solid solution of Rh and $CeO_2$. For this reason, in the exhaust gas purification catalyst disclosed herein, the $CeO_2$ content $D_{CeO2}$ in the upper-layer rear portion D is set to 8 g/L or less. This can reduce the amount of $CeO_2$ present around Rh and suppress the formation of solid solution of Rh and $CeO_2$. Meanwhile, where the $CeO_2$ content $D_{CeO2}$ in the upper-layer rear portion D becomes too low, it will not be possible to respond to rapid fluctuations in the air-fuel ratio of the exhaust gas in a short period, and there is a risk that the emission of harmful components during high-speed operation will actually increase. For this reason, in the technique disclosed herein, the lower limit of the $CeO_2$ content $D_{CeO2}$ in the upper-layer rear portion D is set to 2 g/L or more.

**Brief Description of Drawings**

[Fig. 1]

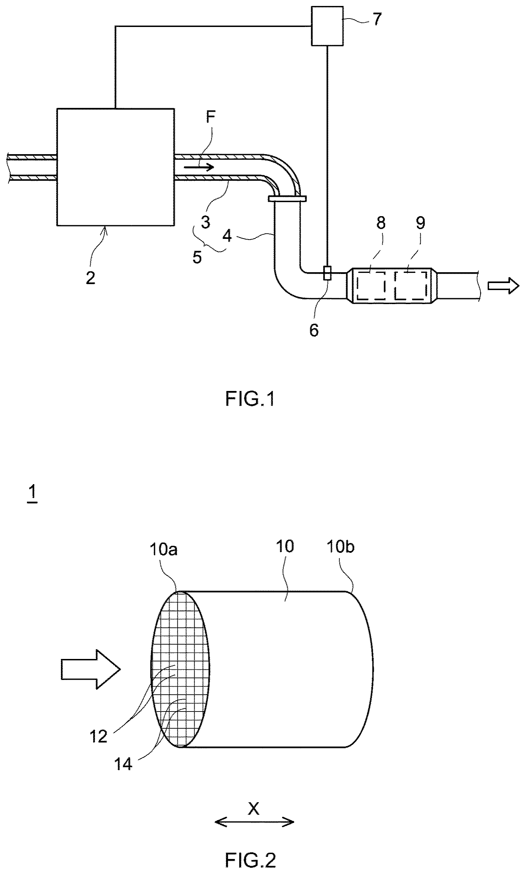

Fig. 1 schematically shows an exhaust system in which an exhaust gas purification catalyst is disposed.
[Fig. 2]
Fig. 2 is a viewpoint view schematically showing an exhaust gas purification catalyst according to one embodiment.
[Fig. 3]

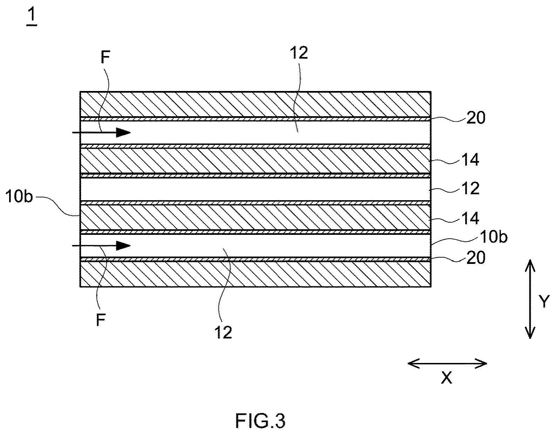

Fig. 3 schematically shows a cross section along a cylinder axis direction of an exhaust gas purification catalyst according to one embodiment.
[Fig. 4]

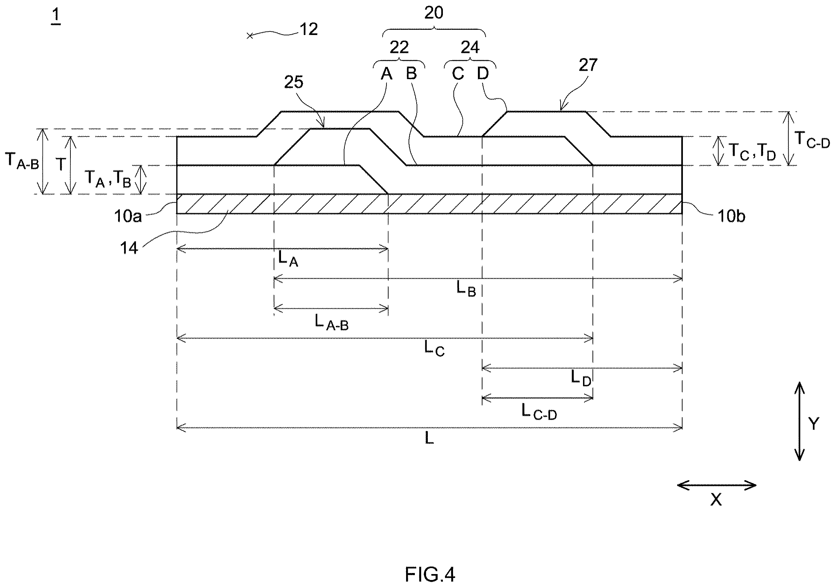

Fig. 4 is a partial cross-sectional view showing an enlarged view of the partition wall surface of the exhaust gas purification catalyst shown in Fig. 3.
[Fig. 5]

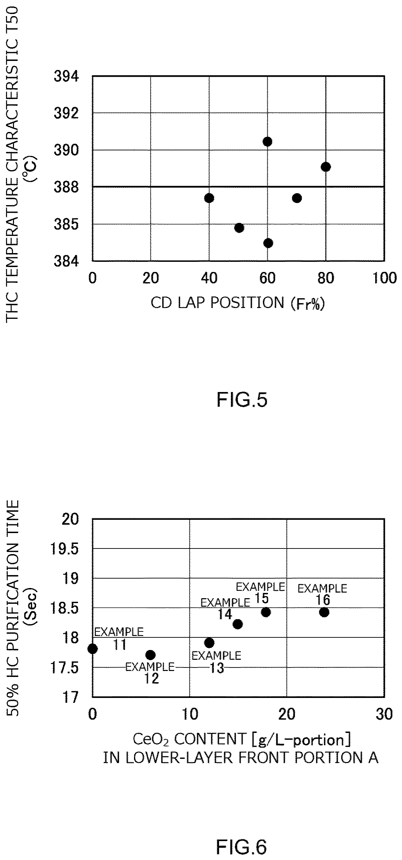

Fig. 5 is a graph showing the measurement results of the 50% HC purification time in the first test.
[Fig. 6]
Fig. 6 is a graph showing the measurement results of the 50% HC purification time in the third test.
[Fig. 7]

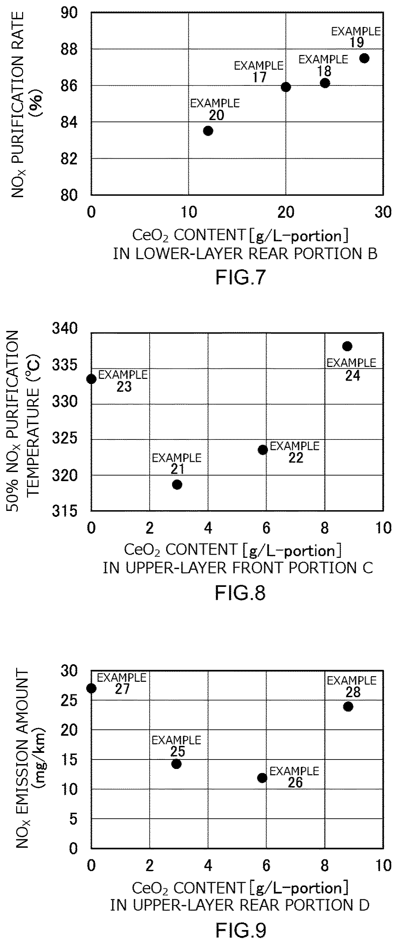

Fig. 7 is a graph showing the measurement results of the $NO_X$ purification rate in the fourth test.
[Fig. 8]
Fig. 8 is a graph showing the measurement results of the 50% HC purification temperature in the fifth test.
[Fig. 9]
Fig. 9 is a graph showing the measurement results of the $NO_X$ emission amount in the sixth test.

**Description of Embodiments**

The following describes an embodiment of the technique disclosed herein. Matters other than those specifically mentioned in the present specification and necessary for carrying out the technique disclosed herein can be understood as design matters for a person skilled in the art that are based on the related art in the pertinent field. In other words, the technique disclosed herein can be carried out based on the disclosure of the specification and the common technical sense in the pertinent field. In addition, in the following drawings, the same reference numerals are used for members and parts that perform the same function. The dimensional relationships (length, width, thickness, etc.) in each drawing do not necessarily reflect the actual dimensional relationships. In addition, in the present specification, the expression "A to B" (A and B are arbitrary numbers) indicating a range includes the meaning of not only "A or more" and "B or less" but also "preferably greater than A" and "preferably smaller than B".

[Exhaust System of Internal Combustion Engine]

First, the use of the exhaust gas purification catalyst disclosed herein will be explained. Fig. 1 is a schematic diagram of an exhaust system in which an exhaust gas purification catalyst is disposed.

An internal combustion engine 2 in Fig. 1 is a mechanism that burns a mixture containing oxygen and fuel gas to generate kinetic energy. The exhaust gas discharged from this internal combustion engine 2 includes gaseous harmful components ($NO_X$, CO, HC) and particulate matter (PM). The exhaust gas is discharged into an exhaust path 5, which is composed of an exhaust manifold 3 and an exhaust pipe 4. In addition, a sensor 6 is attached to the exhaust pipe 4. This sensor 6 detects information relating to the components and temperature of the exhaust gas. The sensor 6 is connected to an engine control unit (ECU) 7. Information detected by the sensor 6 is transmitted to the ECU 7. The ECU 7 refers, as appropriate, to the detection results of the sensor 6 when controlling the operation of the internal combustion engine 2.

The exhaust gas purification catalyst disclosed herein is disposed in the exhaust path 5 (exhaust pipe 4 in Fig. 1) connected to the internal combustion engine 2. Specifically, the exhaust pipe 4 shown in Fig. 1 includes a first purification member 8 and a second purification member 9. The exhaust gas purification catalyst disclosed herein can be used for at least one of the first purification member 8 and the second purification member 9. The exhaust gas purification catalyst purifies harmful components in the exhaust gas flowing through the exhaust pipe 4.

[Exhaust Gas Purification Catalyst]

Next, one embodiment of the exhaust gas purification catalyst disclosed herein will be described. Fig. 2 is a viewpoint view schematically showing an exhaust gas purification catalyst according to the present embodiment. Fig. 3 schematically shows a cross section along the cylinder axis direction of an exhaust gas purification catalyst according to the present embodiment. Fig. 4 is a partial cross-sectional view showing an enlarged view of the partition wall surface of the exhaust gas purification catalyst shown in Fig. 3.

In each figure, symbol X indicates the "cylinder axis direction of the substrate", and symbol Y indicates the "thickness direction of the partition wall of the substrate". In the present specification, the direction in which the exhaust gas flows is called the "exhaust gas flow direction F". The side relatively closer to the internal combustion engine is called the "upstream side (in the exhaust gas flow direction F)", and the side farther from the internal combustion engine is called the "downstream side (in the exhaust gas flow direction F)". In the present specification, the region on the upstream side of the exhaust gas purification catalyst 1 is called the "front portion", and the region on the downstream side is called the "rear portion".

As shown in Fig. 2 to Fig. 4, the exhaust gas purification catalyst 1 according to the present embodiment includes a substrate 10 and a catalyst layer 20. Each component will be described below.

1. Substrate

The substrate 10 is a member that constitutes the framework of the exhaust gas purification catalyst 1. As shown in Fig. 2, the substrate 10 in the present embodiment has a cylindrical outer shape extending in the cylinder axis direction X. It suffices if the outer shape of the substrate has a cylindrical shape that allows exhaust gas passage, and the shape is not limited to that shown in Fig. 2. For example, the outer shape of the substrate may be an elliptical cylinder, a polygonal tube, or the like. In addition, the substrate 10 may be made of any conventionally known material without any particular restrictions. For example, the substrate 10 may be made of ceramics such as cordierite, aluminum titanate, or silicon carbide. In addition, the substrate 10 may be made of alloys such as stainless steel (SUS), Fe-Cr-Al alloys, and Ni-Cr-Al alloys.

In addition, as shown in Fig. 3, the substrate 10 is a straight-flow type substrate. That is, the substrate 10 has a plurality of cells 12 and partition walls 14 that separate the plurality of cells 12. The cells 12 are gas flow paths that pass through the substrate 10 in the cylinder axis direction X. The exhaust gas supplied to the exhaust gas purification catalyst 1 passes through the cells 12 and is discharged to the outside. The shape, size, number, etc. of the cells 12 are not particularly limited. The configuration of these cells 12 can be changed, as appropriate, in consideration of the flow velocity and components of the exhaust gas. For example, as shown in Fig. 2, the front shape of the cell 12 in the present embodiment (shape when viewed along the cylinder axis direction X) is a square. However, the cells may have various geometric front shapes such as a quadrangle, e.g., a parallelogram, a rectangle, and a trapezoid, other polygons (e.g., a triangle, a hexagon, an octagon), a circle, etc.

Meanwhile, the partition wall 14 is a dense member that separates two adjacent cells 12. This partition wall 14 extends from an upstream end 10a of the substrate 10 to a downstream end 10b along the cylinder axis direction X. Therefore, the exhaust gas that flows into the cell 12 flows linearly along the cylinder axis direction X. That is, in the exhaust gas purification catalyst 1 according to the present embodiment, the cylinder axis direction X of the substrate 10 and the exhaust gas flow direction F are substantially the same direction. Although this does not limit the technique disclosed herein, the thickness of the partition wall 14 is preferably 10 $\mu$m or more, and more preferably 20 $\mu$m or more. This ensures sufficient mechanical strength of the substrate 10. Meanwhile, the thickness of the partition wall 14 is preferably 500 $\mu$m or less, and more preferably 100 $\mu$m or less. This ensures sufficient pore size of the cells 12, and therefore the increase in pressure loss due to clogging of the cells 12 can be suppressed.

The entire length and volume of the substrate 10 are not particularly limited, and are preferably changed, as appropriate, depending on the performance of the internal combustion engine 2, the dimensions of the exhaust pipe 6, etc. For example, the total length L of the substrate 10 in the cylinder axis direction X (see Fig. 4) can be set within a range of 10 mm to 500 mm (preferably 50 mm to 300 mm). The volume of the substrate 10 may be set within a range of, for example, 0.1 L to 10 L (preferably 1 L to 5 L). In the present specification, the term "substrate volume" refers to the total volume of the spaces (typically the cells 12) present inside the substrate 10.

2. Catalyst Layer

The catalyst layer 20 is a porous layer provided on the surface of the partition wall 14 of the substrate 10. The porosity of the catalyst layer 20 is preferably 1% or more, more preferably 2% or more, even more preferably 3% or more, and particularly preferably 5% or more. This allows the exhaust gas to permeate easily into the catalyst layer 20, so that more suitable purification performance can be exhibited. Meanwhile, the upper limit of the porosity of the catalyst layer 20 is preferably 40% or less, more preferably 30% or less, even more preferably 20% or less, and particularly preferably 15% or less. A sufficient strength of the catalyst layer 20 can thus be ensured. The porosity of the catalyst layer can be measured by performing image analysis processing on a cross-sectional SEM micrograph along the cylindrical axis direction. For the image analysis process, Image-J or other conventional analysis software can be used.

(1) Components of Catalyst Layer

Next, the components of the catalyst layer 20 will be described. In the present embodiment, the catalyst layer 20 has at least a catalytic metal.

(1-1) Catalytic Metal

The catalytic metal is a metal material that promotes the oxidation (or reduction) of harmful components (HC, CO, $NO_X$) in exhaust gas. Specifically, the oxidation reaction of hydrocarbons (HC) and carbon monoxide (CO) is promoted by contact with the catalytic metal. As a result, HC and CO are converted into water ($H_2O$) and carbon dioxide ($CO_2$). Meanwhile, the reduction reaction of nitrogen oxides ($NO_X$) is promoted by contact with the catalytic metal. As a result, $NO_X$ is converted into water ($H_2O$) and nitrogen ($N_2$). Specific examples of catalytic metals include noble metal catalysts such as gold (Au), silver (Ag), palladium (Pd), platinum (Pt), rhodium (Rh), and ruthenium (Ru). In the exhaust gas purification catalyst 1 according to the present embodiment, the type of catalytic metal contained in each of the four regions (lower-layer front portion A, lower-layer rear portion B, upper-layer front portion C, and upper-layer rear portion D) constituting the catalyst layer 20 is different. The details of the catalytic metal in each region will be described hereinbelow.

The amount of catalytic metal present in the exhaust gas purification catalyst 1 is preferably 1.0 g/L or more, more preferably 1.5 g/L or more, and particularly preferably 2.0 g/L or more. As a result, more suitable exhaust gas purification performance can be exhibited. Meanwhile, in consideration of material costs, the total amount of catalytic metal is preferably 8 g/L or less, more preferably 7 g/L or less, and particularly preferably 6 g/L or less. The "amount of catalytic metal" here refers to the total content of catalytic metal when the volume of the substrate 10 is standardized to 1 L.

(1-2) Support Material

Furthermore, the catalyst layer 20 in the present embodiment contains a support material that supports the catalytic material. By supporting the catalytic metal on the support material, sintering of the catalytic metal can be suppressed. One example of this support material is an OSC material. This OSC material is a metal oxide containing ceria ($CeO_2$). The support material containing this OSC material can impart oxygen storage performance to the catalyst layer 20 and therefore can also contribute to stabilizing the exhaust gas purification performance. Specifically, $CeO_2$ stores oxygen when exhaust gas in a lean state is supplied. Meanwhile, $CeO_2$ releases oxygen when exhaust gas in a rich state is supplied. As a result, stable exhaust gas purification performance can be exhibited even if the air-fuel ratio of the exhaust gas fluctuates. The OSC material may contain components other than $CeO_2$. For example, the OSC material may be a $CeO_2$-$ZrO_2$ composite oxide. The $CeO_2$-$ZrO_2$ composite oxide can suppress sintering of $CeO_2$ in a high-temperature environment, so that high oxygen storage capacity can be stably exhibited. When a $CeO_2$-$ZrO_2$ composite oxide is used as an OSC material, the $CeO_2$ content relative to the total weight (100 wt%) of the composite oxide is preferably 10 wt% or more, more preferably 15 wt% or more, even more preferably 17 wt% or more, and particularly preferably 20 wt% or more.

This ensures that there is a sufficient amount of $CeO_2$ that exhibits oxygen storage capacity. Meanwhile, the $CeO_2$ content relative to the total weight of the $CeO_2$-$ZrO_2$ composite oxide is preferably 70 wt% or less, more preferably 60 wt% or less, even more preferably 50 wt% or less, and particularly preferably 40 wt% or less. This ensures that there is a sufficient amount of $ZrO_2$ that suppresses the sintering of $CeO_2$.

The catalyst layer 20 may also contain a support material other than the OSC material. Suitable examples of such support materials include heat-resistant materials specified in JIS R2001 (alumina ($Al_2O_3$), zirconia ($ZrO_2$), silica ($SiO_2$), magnesia (MgO), calcia (CaO), etc.). By using a support material containing these heat-resistant materials, sintering of the catalytic metal can be more suitably suppressed. When the total weight of the catalyst layer 20 is taken as 100 wt%, the content of the support material other than the OSC material is preferably 10 wt% or more (suitably 15 wt% or more, more suitably 20 wt% or more, and particularly suitably 30 wt% or more). This makes it possible to more suitably suppress sintering of the catalytic metal. Meanwhile, from the viewpoint of ensuring the content of catalytic metal and OSC material, the content of the support material other than the OSC material is preferably 95 wt% or less, more preferably 92.5 wt% or less, and particularly preferably 90 wt% or less.

(1-4) Other Additives

The catalyst layer 20 may also contain other additives, as long as they do not significantly impair the effects of the technique disclosed herein. Examples of such additives include $NO_x$ adsorbents, stabilizing materials, and HC adsorbents. The catalyst layer 20 may also contain trace components derived from the raw materials and manufacturing process. For example, the catalyst layer 20 may contain one or two or more compounds (oxides, sulfates, carbonates, nitrates, chlorides) containing alkaline earth metal elements (Be, Mg, Ca, Ba, etc.), rare earth elements (Y, La, Ce, etc.), alkali metal elements (Li, Na, K, etc.), transition metal elements (Mn, Fe, Co, Ni, etc.), etc.

(2) Structure of Catalyst Layer

Next, the structure of the catalyst layer 20 will be described. As shown in Fig. 4, the catalyst layer 20 in the present embodiment has a lower catalyst layer 22 and an upper catalyst layer 24.

The lower catalyst layer 22 is a catalyst layer provided relatively closer to the surface of the partition wall 14. The lower catalyst layer 22 shown in Fig. 4 is provided on the surface of the partition wall 14. In the present specification, the expression "provided on the surface of the partition wall" means that most of the lower catalyst layer 22 is present on the surface of the partition wall 14, and is not intended to prohibit a part of the lower catalyst layer 22 from penetrating into the interior of the partition wall 14. Typically, if 80% or more (typically 90% or more, for example 95% or more) of the catalyst layer 20 is adhered to the surface of the partition wall 14 in an analysis based on a cross-sectional SEM image, it can be said that "the lower catalyst layer 22 is provided on the surface of the partition wall 14".

Meanwhile, the upper catalyst layer 24 is a catalyst layer that is provided relatively farther from the surface of the partition wall 14. The upper catalyst layer 24 shown in Fig. 4 is provided on the surface of the lower catalyst layer 22. In the present specification, the expression "provided on the surface of the lower catalyst layer 22" means that most of the upper catalyst layer 24 is adhered to the surface of the lower catalyst layer 22, and is not intended to prohibit a part of the upper catalyst layer 24 from penetrating into the interior of the lower catalyst layer 22. Typically, if 50% or more (typically 60% or more, for example 70% or more) of the upper catalyst layer 24 is adhered to the surface of the lower catalyst layer 22 in an analysis based on a cross-sectional SEM image, it can be said that "the upper catalyst layer 24 is provided on the surface of the lower catalyst layer 22".

The catalyst layer 20 in the present embodiment has four regions consisting of the lower-layer front portion A, lower-layer rear portion B, upper-layer front portion C, and upper-layer rear portion D. The type of catalytic metal is selected in each region from the lower-layer front portion A to the upper-layer rear portion D from the viewpoint of exhibiting suitable purification performance in various operation states. Furthermore, as shown in Fig. 4, the catalyst layer 20 in the present embodiment includes a lower-layer lap portion 25 in which the lower-layer front portion A and the lower-layer rear portion B are stacked, and an upper-layer lap portion 27 in which the upper-layer front portion C and the upper-layer rear portion D are stacked. Each configuration will be specifically described below.

(2-1) Catalytic Metal in Each Region

First, the structure of each of the lower-layer front portion A to the upper-layer rear portion D and the catalytic metal contained in each region will be described.

(a) Lower-Layer Front Portion A

The lower catalyst layer 22 has a lower-layer front portion A that extends from the upstream end 10a of the substrate 10 in the exhaust gas flow direction F toward the downstream side (the right side in Fig. 4). In other words, the lower-layer front portion A is a region on the upstream side of the lower catalyst layer 22. This lower-layer front portion A is a region suitable for purifying low-velocity exhaust gas supplied during warm-up operation. Specifically, since the flow velocity of exhaust gas during warm-up operation is very low, the exhaust gas permeates from the upstream side of the exhaust gas purification catalyst 1 into the inside of the catalyst layer 20 and reaches the lower-layer front portion A. In contrast, the lower-layer front portion A in the present embodiment contains palladium (Pd) as a catalytic metal. Pd has better catalytic activity in an oxidized state than other catalytic metals. Therefore, the lower-layer front portion A containing Pd can exhibit a certain level of exhaust gas purification performance even before the recovery (oxygen dissociation) due to warm-up operation has progressed sufficiently. This can reduce the emission of harmful components during warm-up operation.

The Pd content in the lower-layer front portion A is preferably 0.5 g/L or more, more preferably 1.0 g/L or more, even more preferably 2 g/L or more, and particularly preferably 2.8 g/L or more. This can more suitably reduce the emission of harmful components during warm-up operation. Meanwhile, in consideration of the balance between purification performance and material cost, the Pd content in the lower-layer front portion A is preferably 10 g/L or less, more preferably 8 g/L or less, even more preferably 6 g/L or less, and particularly preferably 5.3 g/L or less.

The "content (g/L) of catalytic metal in each region" in the present specification is measured using inductively coupled plasma analysis (ICP) and an electron probe micro analyzer (EPMA). The measurement procedure for the "catalytic metal content (g/L) in each region" will be described below using the measurement procedure for the Pd content in the lower-layer front portion A as an example. In this measurement, first, an upstream measurement sample is prepared by cutting out the upstream region including only the lower-layer front portion A and the upper-layer front portion C from the exhaust gas purification catalyst 1. Next, the upstream measurement sample is pulverized into powder, and ICP is performed to measure the total weight (g) of Pd in the upstream region. Next, an elemental map of the upstream region is acquired by performing EPMA on the cross section of the upstream region along the cylinder axis direction. Based on this elemental map, the ratio ($Pd_A/Pd_{A+C}$) of the Pd amount $Pd_A$ present in the lower-layer front portion A to the Pd amount $Pd_{A+C}$ present in the upstream region is calculated. For the analysis of this elemental map, a conventional image analysis software (such as Image-J) can be used. The weight (g) of Pd in the lower-layer front portion A can be calculated by multiplying the "total weight (g) of Pd in the upstream region" acquired by ICP by the "abundance ratio ($Pd_A/Pd_{A+C}$) acquired with the elemental map". The "Pd content (g/L) in the lower-layer front portion A" can be calculated by dividing this calculation result by the volume (L) of the substrate 10.

The lower-layer front portion A may also contain catalytic metals other than Pd. However, the Pd content in the lower-layer front portion A is preferably 80 wt% or more (suitably 85 wt% or more, more suitably 90 wt% or more, and particularly suitably 95 wt% or more) when the total amount of catalytic metals in the lower-layer front portion A is taken as 100 wt%. This makes it possible to ensure adequately the exhaust gas purification performance during warm-up.

The lower-layer front portion A is preferably a region with the highest content ratio of catalytic metal relative to the entire catalyst layer 20. Specifically, the content ratio of catalytic metal in the lower-layer front portion A relative to the catalytic metal (100 wt%) of the entire catalyst layer 20 is preferably 30 wt% or more, more preferably 35 wt% or more, and particularly preferably 40 wt% or more. This ensures sufficient purification performance during warm-up operation and after fuel cut, even if the amount of catalytic metal in the entire catalyst layer 20 is reduced due to material costs. Meanwhile, where the content ratio of catalytic metal in the lower-layer front portion A becomes too high, the catalytic metal content in other regions may decrease when the amount of catalytic metal in the entire catalyst layer 20 is reduced, making it difficult for each region to exhibit the required function. Considering this point, the content ratio of catalytic metal in the lower-layer front portion A is preferably 80 wt% or less, more preferably 75 wt% or less, and particularly preferably 70 wt% or less.

The length $L_A$ of the lower-layer front portion A in the exhaust gas flow direction F is not particularly limited as long as it is shorter than the entire length L of the substrate 10. However, from the viewpoint of adequately exhibiting the function of the lower-layer front portion A (purifying exhaust gas during warm-up operation), the length $L_A$ of the lower-layer front portion A is preferably 30% or more, more preferably 35% or more, even more preferably 40% or more, and particularly preferably 45% or more of the entire length L of the substrate 10. Meanwhile, the length $L_A$ of the lower-layer front portion A is preferably 70% or less, more preferably 65% or less, even more preferably 60% or less, and particularly preferably 55% or less of the entire length L of the partition wall 14. This makes it easier to ensure the length $L_B$ of the lower-layer rear portion B described hereinbelow. The lower-layer front portion A has a different composition of catalytic metal and $CeO_2$ from other regions, so it can be distinguished from other regions visually by color development. Therefore, the length $L_A$ of the lower-layer front portion A can be measured visually after scraping off other regions (such as the upper catalyst layer 24) with a brush etc.

The thickness $T_A$ of the lower-layer front portion A is also not particularly limited. However, from the viewpoint of adequately exhibiting the function of the lower-layer front portion A, the thickness $T_A$ of the lower-layer front portion A relative to the thickness T (100%) of the catalyst layer 20 is preferably 25% or more, more preferably 30% or more, even more preferably 35% or more, and particularly preferably 40% or more. Meanwhile, the thickness $T_A$ of the lower-layer front portion A is preferably 75% or less, more preferably 70% or less, even more preferably 65% or less, and particularly preferably 60% or less. This makes it easier to ensure the thickness $T_C$ of the upper-layer front portion C described hereinbelow. The "thickness T of the catalyst layer" and the "thickness $T_A$ of the lower-layer front portion A" herein are the average values of thicknesses measured at multiple locations (e.g., five locations) in a region where no lap portion as described hereinbelow is present.

(b) Lower-Layer Rear Portion B

The lower catalyst layer 22 has the lower-layer rear portion B that extends from the downstream end 10b of the substrate 10 in the exhaust gas flow direction F toward the upstream side (left side in Fig. 4). In other words, the lower-layer rear portion B is the downstream region of the lower catalyst layer 22. For example, exhaust gas during warm-up operation can also be supplied to this lower-layer rear portion B. Therefore, by including Pd, which has excellent catalytic activity in an oxidized state, the emission of harmful components during warm-up operation can be reduced. The lower-layer rear portion B is more likely supplied with exhaust gas that has passed through other regions (such as the lower-layer front portion A and the upper-layer front portion C). The exhaust gas that has passed through these other regions may contain substances in which harmful components have changed (substances generated within the catalyst). For example, long-chain hydrocarbons, which are a type of hydrocarbon (HC), may become short-chain hydrocarbons (such as methane ($CH_3$)) before being decomposed into water and carbon dioxide. In addition, when $NO_X$ is excessively reduced in other regions, it may become ammonia ($NH_3$). Pt is suitable as a catalytic metal for the lower-layer rear portion B because Pt suitably promotes the decomposition of short-chain hydrocarbons and the oxidation of ammonia.

Moreover, the total content of Pd and Pt in the lower-layer rear portion B is preferably 0.1 g/L or more, more preferably 0.25 g/L or more, even more preferably 0.5 g/L or more, and particularly preferably 0.8 g/L or more. This ensures sufficient purification performance in the lower-layer rear portion B. Meanwhile, in consideration of the balance between purification performance and material cost, the total content of Pd and Pt in the lower-layer rear portion B is preferably 10 g/L or less, more preferably 7.5 g/L or less, even more preferably 5 g/L or less, and particularly preferably 3.4 g/L or less. The "total content (g/L) of Pd and Pt in the lower-layer rear portion B" can be measured according to the same procedure as used for measuring "Pd content (g/L) in the lower-layer front portion A" described above, so a duplicate explanation will be omitted.

The lower-layer rear portion B may contain catalytic metals other than Pd and Pt. However, the total content of Pd and Pt in the lower-layer rear portion B is preferably 80 wt% or more (suitably 85 wt% or more, more suitably 90 wt% or more, and particularly suitably 95 wt% or more) when the total amount of catalytic metals in the lower-layer rear portion B is 100 wt%. This allows the emission of harmful components to be reduced more suitably.

Furthermore, the lower-layer rear portion B is preferably the region with the second highest content ratio of catalytic metal relative to the entire catalyst layer 20. Specifically, the content ratio of catalytic metal in the lower-layer rear portion B relative to the entire catalyst layer 20 is preferably 10 wt% or more, more preferably 15 wt% or more, and particularly preferably 20 wt% or more. This allows the purification performance by catalytic metal to be ensured at a certain level or higher even in the lower-layer rear portion B, which has a very high oxygen storage capacity. Meanwhile, where the content ratio of catalytic metal in the lower-layer rear portion B becomes too high, the catalytic metal content in other regions may decrease when the amount of catalytic metal in the entire catalyst layer 20 is reduced, making it difficult for each region to exhibit the required function. Considering this point, the content ratio of catalytic metal in the lower-layer rear portion B is preferably 50 wt% or less, more preferably 47 wt% or less, and particularly preferably 45 wt% or less.

Furthermore, the length $L_B$ of the lower-layer rear portion B in the cylinder axis direction X is not particularly limited as long as it is shorter than the entire length L of the partition wall 14. However, from the viewpoint of suitably generating the function of the lower-layer rear portion B, the length $L_B$ of the lower-layer rear portion B is preferably 50% or more, more preferably 55% or more, even more preferably 60% or more, and particularly preferably 65% or more of the entire length L of the partition wall 14. Meanwhile, the length $L_B$ of the lower-layer rear portion B is preferably 90% or less, more preferably 85% or less, even more preferably 80% or less, and particularly preferably 75% or less of the entire length L of the partition wall 14. This makes it easier to ensure the length $L_A$ of the lower-layer front portion A.

The thickness $T_B$ of the lower-layer rear portion B is also not particularly limited. However, from the viewpoint of sufficiently exhibiting the function of the lower-layer rear portion B, the thickness $T_B$ of the lower-layer rear portion B is preferably 25% or more, more preferably 30% or more, even more preferably 35% or more, and particularly preferably 40% or more of the thickness T of the catalyst layer 20. Meanwhile, the upper limit of the thickness $T_B$ of the lower-layer rear portion B is preferably 85% or less, more preferably 80% or less, even more preferably 75% or less, and particularly preferably 70% or less of the thickness T of the catalyst layer 20. This makes it easier to ensure the thickness $T_D$ of the upper-layer rear portion D.

(2-3) Upper-Layer Front Portion C

The upper catalyst layer 24 has the upper-layer front portion C that extends from the upstream end 10a of the substrate 10 in the exhaust gas flow direction F toward the downstream side (the right side in Fig. 4). In other words, the upper-layer front portion C is the region on the upstream side of the upper catalyst layer 24. This upper-layer front portion C has the function of improving the $NO_X$ purification performance of the entire exhaust gas purification catalyst 1. Specifically, when exhaust gas is supplied to the exhaust gas purification catalyst 1, the water-gas shift reaction shown in the following formula (1) occurs, and hydrogen gas ($H_2$) is generated. This hydrogen gas then becomes a reducing agent that purifies $NO_X$, as shown in the following formula (2). Here, the upper-layer front portion C, which is the region on the upstream side of the upper catalyst layer 24, is the region that the exhaust gas first comes into contact with in various situations. Therefore, by promoting the water-gas shift reaction in the upper-layer front portion C, the $NO_X$ purification performance of the entire exhaust gas purification catalyst 1 can be improved. For this purpose, the upper-layer front portion C includes rhodium (Rh) as a catalytic metal. Since Rh is excellent at promoting the water-gas shift reaction, the amount of $H_2$ generated in the upper-layer front portion C can be increased. This can greatly improve the $NO_X$ purification performance of the entire exhaust gas purification catalyst 1.

$$CO + H_2O \rightarrow CO_2 + H_2 \qquad (1)$$

$$NO_X + H_2 \rightarrow N_2 + H_2O \qquad (2)$$

Moreover, the Rh content in the upper-layer front portion C is preferably 0.01 g/L or more, more preferably 0.05 g/L or more, even more preferably 0.1 g/L or more, and particularly preferably 0.2 g/L or more. This can more suitably promote the water-gas shift reaction in the upper-layer front portion C. Meanwhile, in consideration of the balance between purification performance and material cost, the Rh content in the upper-layer front portion C is preferably 1 g/L or less, more preferably 0.5 g/L or less, even more preferably 0.4 g/L or less, and particularly preferably 0.3 g/L or less. The "Rh content (g/L) in the upper-layer front portion C" can be measured according to the same procedure as used for measuring the "Pd content (g/L) in the lower-layer front portion A" described above, so a duplicated explanation will be omitted.

Furthermore, from the viewpoint of adequately promoting the generation of $H_2$ in the upper-layer front portion C, it is preferable that the Rh content in the upper-layer front portion C be 50 wt% or more (suitably 60 wt% or more, more suitably 70 wt% or more, and particularly suitably 80 wt% or more) relative to the catalytic metal content (100 wt%) in the upper-layer front portion C.

The length $L_C$ of the upper-layer front portion C in the cylinder axis direction X (exhaust gas flow direction F) is not particularly limited as long as it is shorter than the entire length L of the partition wall 14. However, from the viewpoint of more adequately causing the water-gas shift reaction, the length $L_C$ of the upper-layer front portion C is preferably 35% or more of the entire length L of the partition wall 14, more preferably 40% or more, even more preferably 45% or more, and particularly preferably 50% or more. Meanwhile, from the viewpoint of ensuring a sufficient length $L_D$ of the upper-layer rear portion D described hereinbelow, the length $L_C$ of the upper-layer front portion C is preferably 95% or less, more preferably 90% or less, even more preferably 85% or less, and particularly preferably 80% or less of the entire length L of the partition wall 14.

Furthermore, the thickness Tc of the upper-layer front portion C is not particularly limited. However, from the viewpoint of more adequately causing the water-gas shift reaction, the thickness Tc of the upper-layer front portion C is preferably 25% or more, more preferably 30% or more, even more preferably 35% or more, and particularly preferably 40% or more of the thickness T of the catalyst layer 20. Meanwhile, from the viewpoint of ensuring a sufficient thickness $T_A$ of the lower-layer front portion A, the thickness $T_C$ of the upper-layer front portion C is preferably 75% or less, more preferably 70% or less, even more preferably 65% or less, and particularly preferably 60% or less of the thickness T of the catalyst layer 20.

Upper-Layer Rear Portion D

The upper catalyst layer 24 has the upper-layer rear portion D that extends from the downstream end 10b of the substrate 10 in the exhaust gas flow direction F toward the upstream side (left side in Fig. 4). In other words, the upper-layer rear portion D is the region on the downstream side of the upper catalyst layer 24. This upper-layer rear portion D has the function of purifying exhaust gas discharged during high-speed operation. Specifically, the exhaust gas during high-speed operation flows very fast, so it hardly permeates the upstream portion of the catalyst layer 20 and permeates the upper catalyst layer 24 in the downstream portion where the flow velocity begins to decrease. That is, the exhaust gas during high-speed operation mainly permeates the upper-layer rear portion D, so that the opportunity for contact with the catalyst layer 20 is reduced. In contrast, in the exhaust gas purification catalyst disclosed herein, rhodium (Rh) is used as the catalytic metal of the upper-layer rear portion D. Since Rh is a metal with excellent three-way performance, harmful components can be suitably purified even if the opportunity for contact with exhaust gas is small. Therefore, the upper-layer rear portion D in the present embodiment can adequately purify the exhaust gas during high-speed operation.

Moreover, the Rh content in the upper-layer rear portion D is preferably 0.01 g/L or more, more preferably 0.05 g/L or more, even more preferably 0.1 g/L or more, and particularly preferably 0.2 g/L or more. This allows the exhaust gas during high-speed operation to be more suitably purified. Meanwhile, in consideration of the balance between purification performance and material cost, the Rh content in the upper-layer rear portion D is preferably 1 g/L or less, more preferably 0.5 g/L or less, even more preferably 0.4 g/L or less, and particularly preferably 0.3 g/L or less. The "Rh content (g/L) in the upper-layer rear portion D" can be measured according to the same procedure as used for measuring the "Pd content (g/L) in the lower-layer front portion A" described above, so a duplicate explanation will be omitted.

In addition, from the viewpoint of adequately purifying exhaust gas during high-speed operation, the Rh content in the upper-layer rear portion D is preferably 30 wt% or more (suitably 40 wt% or more, more suitably 45 wt% or more, and particularly suitably 50 wt% or more) relative to the catalytic metal content (100 wt%) in the upper-layer rear portion D.

The length $L_D$ of the upper-layer rear portion D in the cylinder axis direction X may be less than the entire length L of the partition wall 14 and is not particularly limited. However, from the viewpoint of adequately purifying exhaust gas during high-speed operation, the length $L_D$ of the upper-layer rear portion D is preferably 25% or more, more preferably 30% or more, even more preferably 35% or more, and particularly preferably 40% or more of the entire length L of the partition wall 14. Meanwhile, from the viewpoint of ensuring the sufficient length $L_C$ of the upper-layer front portion C, the length $L_D$ of the upper-layer rear portion D is preferably 85% or less, more preferably 80% or less, even more preferably 75% or less, and particularly preferably 70% or less of the entire length L of the partition wall 14.

Furthermore, the thickness $T_D$ of the upper-layer rear portion D is also not particularly limited. For example, the thickness $T_D$ of the upper-layer rear portion D may be 25% or more, 30% or more, 35% or more, or 40% or more of the thickness T of the catalyst layer 20. Meanwhile, from the viewpoint of ensuring a sufficient thickness $T_D$ of the lower-layer rear portion D, the thickness $T_D$ of the upper-layer rear portion D is preferably 75% or less, more preferably 70% or less, even more preferably 65% or less, and particularly preferably 60% or less of the thickness T of the catalyst layer 20.

(2-2) Lap Portion

Next, the catalyst layer 20 in the present embodiment has a lower-layer lap portion 25 and an upper-layer lap portion 27. Each lap portion will be explained below.

(a) Lower-Layer Lap Portion

The lower-layer lap portion 25 is a region where the lower-layer front portion A and the lower-layer rear portion B are stacked. In the exhaust gas purification catalyst 1 shown in Fig. 4, the upstream end of the lower-layer rear portion B is stacked on the downstream end of the lower-layer front portion A. In this lower-layer lap portion 25, the lower catalyst layer 22 is formed in which both the catalytic metal (Pd) of the lower-layer front portion A and the catalytic metal (Pd and/or Pt) of the lower-layer rear portion B are present. As a result, the amount of Pd and Pt present in the lower-layer lap portion 25 is greater than in other regions. This can further improve the purification performance during warm-up operation and the purification performance against substances generated within the catalyst.

The length $L_{A-B}$ of the lower-layer lap portion 25 in the cylinder axis direction X (exhaust gas flow direction F) is preferably 5% or more, more preferably 10% or more, and particularly preferably 15% or more of the entire length L of the partition wall 14. This can more suitably improve the purification performance during warm-up operation and the purification performance against substances generated within the catalyst. Meanwhile, from the viewpoint of reliably preventing clogging of the cells 12 due to overlap between the lower-layer lap portion 25 and the upper-layer lap portion 27, the length $L_{A-B}$ of the lower-layer lap portion 25 is preferably 40% or less, more preferably 35% or less, even more preferably 30% or less, and particularly preferably 25% or less of the entire length L of the partition wall 14.

Furthermore, when the total thickness T of the catalyst layer 20 in the region where no lap portion is present is taken as 100%, the thickness $T_{A-B}$ of the lower-layer lap portion 25 is preferably 50% or more, more preferably 60% or more, even more preferably 70% or more, and particularly preferably 80% or more. This makes it easier for the exhaust gas to come into contact with the lower catalyst layer 22 (lower-layer front portion A or lower-layer rear portion B), so that purification of the exhaust gas (particularly purification during warm-up operation) can be performed more efficiently. Also, the thickness $T_{A-B}$ of the lower-layer lap portion 25 is preferably 150% or less, more preferably 140% or less, even more preferably 130% or less, and particularly preferably 120% or less. This can more suitably prevent an increase in pressure loss due to clogging of the cells 12.

(b) Upper-Layer Lap Portion

The upper-layer lap portion 27 is a region where the upper-layer front portion C and the upper-layer rear portion D are stacked. As shown in Fig. 4, in the exhaust gas purification catalyst 1 according to the present embodiment, the upstream end of the upper-layer rear portion D is stacked on the downstream end of the upper-layer front portion C. In this upper-layer lap portion 27, an upper catalyst layer 24 is formed in which both the catalytic metal (Rh) of the upper-layer front portion C and the catalytic metal (Rh) of the upper-layer rear portion D are present. Therefore, the amount of Ph present in the upper-layer lap portion 27 is greater than in other regions. This can further improve the water-gas shift reaction and the purification performance during high-speed operation.

The length $L_{C-D}$ of the upper-layer lap portion 27 in the cylinder axis direction X (exhaust gas flow direction F) is preferably 5% or more, more preferably 10% or more, and particularly preferably 15% or more of the entire length L of the partition wall 14. This allows for more suitable improvement of the water-gas shift reaction or the purification performance during high-speed operation. Meanwhile, from the viewpoint of reliably preventing clogging of the cell 12 due to overlap between the lower-layer lap portion 25 and the upper-layer lap portion 27, the length $L_{C-D}$ of the upper-layer lap portion 27 is preferably 40% or less, more preferably 35% or less, even more preferably 30% or less, and particularly preferably 25% or less of the entire length L of the partition wall 14.

When the total thickness T of the catalyst layer 20 in the region where no lap portion is present is taken as 100%, the thickness $T_{C-D}$ of the upper-layer lap portion 27 is preferably 50% or more, more preferably 60% or more, even more preferably 70% or more, and particularly preferably 80% or more. This makes it easier for the exhaust gas flowing through the cells 12 to come into contact with the upper catalyst layer 24, so that purification of the exhaust gas (particularly purification during warm-up operation) can be performed more efficiently. Also, the thickness $T_{C-D}$ of the upper-layer lap portion 27 is preferably 150% or less, more preferably 140% or less, even more preferably 130% or less, and particularly preferably 120% or less. This can more suitably prevent an increase in pressure loss due to clogging of the cells 12.

(c) Positions of Lower-Layer Lap Portion and Upper-Layer Lap Portion

Here, the exhaust gas purification catalyst 1 according to the present embodiment is configured so that the formation positions of the lower-layer lap portion 25 and the upper-layer lap portion 27 do not overlap in the cylinder axis direction X of the substrate 10. As described above, by forming lap portions (lower-layer lap portion 25 and upper-layer lap portion 27) where two catalyst regions are stacked, various exhaust gas purification performances can be improved. However, as shown in Fig. 4, in the region where the lower-layer lap portion 25 is formed, at least three layers, the lower-layer front portion A, the lower-layer rear portion B, and the upper-layer front portion C, are stacked. Similarly, in the region where the upper-layer lap portion 25 is formed, at least three layers, the lower-layer rear portion B, the upper-layer front portion C, and the upper-layer rear portion D, are stacked. In addition, where the upper-layer lap portion 27 and the lower-layer lap portion 25 overlap in the cylinder axis direction X, a region in which all four layers included in the catalyst layer 20 are stacked is generated. In this region where the lap portions overlap, the thickness of the catalyst layer 20 increases significantly, and the opening area of the cells 12 decreases. This may cause a sudden increase in pressure loss. In contrast, in the exhaust gas purification catalyst 1 according to the present embodiment, the formation positions of the respective lap portions are shifted so that the lower-layer lap portion 25 and the upper-layer lap portion 27 do not overlap in the cylinder axis direction X. This allows the opening area of the cells 12 to be ensured at a certain level or higher, thereby making it possible to suppress a sudden increase in pressure loss due to clogging of the cells 12.

When the lower-layer lap portion 25 and the upper-layer lap portion 27 are formed at different positions as in the present embodiment, it is preferable to form the lower-layer lap portion 25 on the upstream side in the exhaust gas flow direction F and to form the upper-layer lap portion 27 on the downstream side. Since the exhaust gas purification catalyst 1 warms up from the upstream side during warm-up operation, it is preferable to arrange the lower-layer lap portion 25, which suitably functions during warm-up operation, on the upstream side. Meanwhile, from the viewpoint of increasing the frequency of contact between the catalytic metal and the exhaust gas, which flows at a high velocity during high-speed operation, it is preferable to arrange the upper-layer lap portion 27 on the downstream side. As a result, high exhaust gas purification performance can be exhibited in both warm-up operation and high-speed operation.

Specifically, it is preferable that a center 27c of the upper-layer lap portion 27 be located at a position 40% or more (more suitably 45% or more, even more suitably 50% or more, and particularly suitably 55% or more) from the upstream end 10 of the substrate 10. As a result of forming the upper-layer lap portion 27 on the downstream side, exhaust gas with a high flow velocity can easily come into contact with the upper-layer lap portion 27, thereby making it possible to improve the exhaust gas purification performance during high-speed operation. Meanwhile, the flow velocity of the exhaust gas after contacting the upper-layer lap portion 27 decreases, and the exhaust gas is likely to flow into the catalyst layer 20. For this reason, it is preferable to provide a certain length of the catalyst layer 20 downstream of the upper-layer lap portion 27. From this viewpoint, it is preferable that the center 27c of the upper-layer lap portion 27 be located at a position 70% or less (more suitably 65% or less, and even more suitably 60% or less) from the upstream end 10 of the substrate 10.

Meanwhile, it is preferable that a center 25c of the lower-layer lap portion 25 be located at a position 50% or less (more suitably 45% or less) from the upstream end 10 of the substrate 10. As a result of forming the lower-layer lap portion 25 on the upstream side, exhaust gas with a low flow velocity can easily come into contact with the lower-layer lap portion 25, thereby improving the exhaust gas purification performance during warm-up operation. Meanwhile, where the lower-layer lap portion 25 is formed too far upstream, the exhaust gas flowing into the exhaust gas purification catalyst 1 is likely to pass above the lower-layer lap portion 25. From this viewpoint, it is preferable that the center 25c of the lower-layer lap portion 25 be located at a position 35% or more (more suitably 40% or more) from the upstream end 10 of the substrate 10.

3. Summary

As described above, the exhaust gas purification catalyst 1 according to the present embodiment includes a catalyst layer 20 having a lower-layer front portion A, a lower-layer rear portion B, an upper-layer front portion C, and an upper-layer rear portion D. The lower-layer front portion A contains Pd, which has excellent catalytic activity in an oxidized state. Therefore, the lower-layer front portion A contributes to improving the exhaust gas purification performance during warm-up operation. Next, the lower-layer rear portion B contains Pd, which has excellent catalytic activity in an oxidized state, and Pt, which has excellent purification performance against substances generated within the catalyst. Next, the upper-layer front portion C contains Rh, which is excellent at promoting the water-gas shift reaction and therefore contributes to improving the $NO_X$ purification performance of the entire exhaust gas purification catalyst 1. The upper-layer rear portion D contains Rh, which is excellent in three-way performance, and therefore contributes to improving the exhaust gas purification performance during high-speed operation when high-velocity, high-temperature exhaust gas is supplied. As described above, the exhaust gas purification catalyst 1 according to the present embodiment is configured to be capable of exhibiting suitable purification performance in various operation states.

Furthermore, the exhaust gas purification catalyst 1 according to the present embodiment has the lower-layer lap portion 25 and the upper-layer lap portion 27. The amount of catalytic metal present in these lap portions is greater than in other regions. Therefore, by stacking the regions (lower-layer front portion A, lower-layer rear portion B, upper-layer front portion C, and upper-layer rear portion D) so that the lower-layer lap portion 25 and the upper-layer lap portion 27 are generated, the exhaust gas purification performance can be further improved. In addition, the exhaust gas purification catalyst 1 according to the present embodiment is configured so that the formation positions of the lower-layer lap portion 25 and the upper-layer lap portion 27 do not overlap in the cylinder axis direction X of the substrate 10. This can ensure a sufficient opening area of the cells 12, thereby making it possible to prevent an increase in pressure loss due to clogging of the cells 12.

[Method for Manufacturing Exhaust Gas Purification Catalyst]

Next, an example of a method for manufacturing the exhaust gas purification catalyst 1 having the above configuration will be described. This manufacturing method includes at least a lower layer formation step and an upper layer formation step. Each step will be described below.

1. Lower Layer Formation Step

In this step, the lower catalyst layer 22 is formed. This lower layer formation step includes a lower-layer front portion formation step for forming the lower-layer front portion A and a lower-layer rear portion formation step for forming the lower-layer rear portion B. In the lower-layer front portion formation step, first, a slurry for forming the lower-layer front portion A is supplied from the upstream end 10a of the substrate 10 into the cells 12. Then, the inside of the cells 12 is sucked from the downstream end 10b of the substrate 10. This allows the slurry to be applied to the surface of the partition walls 14 so as to extend from the upstream end 10a of the substrate 10 toward the downstream side (the right side in Fig. 4). In this state, the lower-layer front portion A is formed by drying and firing. Meanwhile, in the lower-layer rear portion formation step, a slurry for forming the lower-layer rear portion B is supplied from the downstream end 10b of the substrate 10 into the cells 12. Then, the inside of the cells 12 is sucked from the upstream end 10a of the substrate 10. This allows the slurry to be applied to the surface of the partition walls 14 so as to extend from the downstream end 10b of the substrate 10 toward the upstream side (the left side in Fig. 4). At this time, the slurry for the lower-layer rear portion B can be applied to the upper side of the lower-layer front portion A by adjusting the supply amount of slurry and the suction conditions (suction time, suction force, etc.) in the cells 12. By drying and firing in this state, the lower-layer lap portion 25 is formed in which a part (upstream end) of the lower-layer rear portion B is stacked on a part (downstream end) of the upper side of the lower-layer front portion A. The order of performing the lower-layer front portion formation step and the lower-layer rear portion formation step is not particularly limited. For example, the lower-layer front portion A may be formed after forming the lower-layer rear portion B. That is, the lower-layer lap portion disclosed herein may have a configuration in which a part (downstream end) of the lower-layer front portion A is stacked on a part (upstream end) of the lower-layer rear portion B.

2. Upper Layer Formation Step

In this step, the upper catalyst layer 24 is formed. This upper layer formation step includes an upper-layer front portion formation step for forming the upper-layer front portion C, and an upper-layer rear portion formation step for forming the upper-layer rear portion D. In the upper-layer front portion formation step, first, a slurry for forming the upper-layer front portion C is supplied from the upstream end 10a of the substrate 10 into the cells 12. Then, the inside of the cells 12 is sucked from the downstream end 10b of the substrate 10. This allows the slurry to be applied to the surface of the lower catalyst layer 22 so as to extend from the upstream end 10a of the substrate 10 toward the downstream side (the right side in Fig. 4). In this state, the upper-layer front portion C is formed by drying and firing. Meanwhile, in the upper-layer rear portion formation step, a slurry for forming the upper-layer rear portion D is supplied from the downstream end 10b of the substrate 10 into the cells 12. Then, the inside of the cells 12 is sucked from the upstream end 10a of the substrate 10. This allows the slurry to be applied onto the surface of the lower catalyst layer 22 so as to extend from the downstream end 10b of the substrate 10 toward the upstream side (the left side in Fig. 4). At this time, the slurry for the upper-layer rear portion D can be applied to the upper side of the upper-layer front portion C by adjusting the supply amount of the slurry and the suction conditions (suction time, suction force, etc.) in the cells 12. By drying and firing in this state, the upper-layer lap portion 27 is formed in which a part (upstream end) of the upper-layer rear portion D is stacked on a part (downstream end) of the upper-layer front portion C. The order of performing the upper-layer front portion formation step and the upper-layer rear portion formation step is also not particularly limited. For example, the upper-layer front portion C may be formed after forming the upper-layer rear portion D. That is, the upper-layer lap portion disclosed herein may have a configuration in which the downstream end of the upper-layer front portion C is stacked on the upstream end of the upper-layer rear portion D.

The slurry used in each step can be prepared by dispersing the components of the catalyst layer (catalytic metal, OSC material, etc.) in a dispersion medium. This dispersion medium may be an aqueous medium mainly composed of water, or a non-aqueous medium mainly composed of an organic solvent (alcohols etc.). The slurry may also contain a binder for adjusting the viscosity. The length of each region in the cylinder axis direction X can be adjusted by adjusting the viscosity of the slurry. The slurry may also contain a pore-forming material (resin beads etc.). This makes it easy to adjust the porosity of the catalyst layer 20 after firing.

The exhaust gas purification catalyst disclosed herein is not limited to that manufactured by the manufacturing method described above. For example, in the manufacturing method described above, drying and firing are performed every time a slurry is applied. This allows each region constituting the catalyst layer 20 to be formed one by one. However, the procedure for forming the catalyst layer 20 is not limited to this. For example, after applying and drying each slurry of the lower-layer front portion A to the upper-layer rear portion D, all the dried films may be co-fired. This allows the lower-layer front portion A to the upper-layer rear portion D to be formed simultaneously, improving the manufacturing efficiency of the exhaust gas purification catalyst.

[Other Embodiments]

Above, one embodiment of the exhaust gas purification catalyst disclosed herein has been explained. However, the exhaust gas purification catalyst disclosed herein is not limited to the embodiment described above.

1. Content of OSC Material in Each Region

For example, it is preferable that the amount of OSC material ($CeO_2$ content) differs in each region of the lower-layer front portion A to the upper-layer rear portion D described above. This makes it possible to construct an exhaust gas purification catalyst that can exhibit suitable purification performance in a wider variety of operation states. A specific explanation is given below.

(1) $CeO_2$ Content $A_{CeO2}$ in the Lower-Layer Front Portion A

First, when adding an OSC material to the catalyst layer 20, it is preferable to set the $CeO_2$ content $A_{CeO2}$ in the lower-layer front portion A to 15 g/L or less. This makes it easier for the purification performance to be recovered during warm-up operation. Specifically, at the start of operation, most of the catalytic metal is oxidized and the catalytic activity is reduced. Then, where the warm-up operation is started, oxygen is gradually dissociated from the catalytic metal as the exhaust gas temperature rises, and the purification performance increases (recovers). Meanwhile, at the start of operation, the OSC material ($CeO_2$) also stores a lot of oxygen. Therefore, where there is a large amount of $CeO_2$ near the catalytic metal, the recovery of the catalytic metal (dissociation of oxygen) may be hindered by the oxygen released by $CeO_2$. In contrast, where the $CeO_2$ content $A_{CeO2}$ in the lower-layer front portion A is limited to a certain level or less, the supply of oxygen from $CeO_2$ during warm-up operation can be suppressed. This promotes the dissociation of oxygen from the catalytic metal, and the purification performance can be recovered quickly. From the viewpoint of further improving the warm-up performance, the $CeO_2$ content $A_{CeO2}$ in the lower-layer front portion A is more preferably 14 g/L or less, even more preferably 13 g/L or less, and particularly preferably 12 g/L or less.

From the viewpoint of promoting the recovery of purification performance during warm-up operation, the lower-layer front portion A may not contain $CeO_2$ ($A_{CeO2}$ = 0 g/L). Meanwhile, the lower limit of the $CeO_2$ content $A_{CeO2}$ in the lower-layer front portion A is more preferably 2 g/L or more, even more preferably 4 g/L or more, and particularly preferably 6 g/L or more. By imparting a certain oxygen storage capacity to the lower-layer front portion A, it is possible to construct an exhaust gas purification catalyst that can easily respond to fluctuations in the air-fuel ratio of exhaust gas. It has been confirmed through experiments that when the $CeO_2$ content $A_{CeO2}$ in the lower-layer front portion A is small, the recovery is practically not inhibited by $CeO_2$.

In the present specification, the "$CeO_2$ content $A_{CeO2}$ in the lower-layer front portion A" refers to the weight (g/L) of $CeO_2$ contained in the lower-layer front portion A when the substrate volume $V_A$ of the region in which the lower-layer front portion A is present is assumed to be 1 L. The $CeO_2$ content (g/L) in each region of the catalyst layer 20 is measured by ICP and EPMA, as in the above-mentioned "catalytic metal content (g/L) in each region". The measurement procedure for the "$CeO_2$ content (g/L) in each region" will be explained below using the measurement procedure for the $CeO_2$ content $A_{CeO2}$ in the lower-layer front portion A and the $CeO_2$ content $C_{CeO2}$ in the upper-layer front portion C as an example.

In this measurement, first, an upstream region including only the lower-layer front portion A and the upper-layer front portion C (i.e., the region upstream of the lower-layer lap portion 25 in Fig. 4) is cut out from the exhaust gas purification catalyst 1. Next, the upstream region is pulverized into powder, and ICP is performed to measure the abundance ratio (%) of the Ce element and a comparative element in the upstream region. The type of the "comparative element" is not particularly limited, and any element other than the Ce element can be selected as appropriate. For example, when a $CeO_2$-$ZrO_2$ composite oxide is used as the OSC material, the Zr element can be selected. When $Al_2O_3$ is used as the support material, the Al element can be selected. Explained hereinbelow is the case where the Al element is selected as an example.

The $CeO_2$ ratio and $Al_2O_3$ ratio can be calculated by converting the abundance ratio of Ce element and the abundance ratio of Al element measured by the ICP into oxides. Next, the same process is performed on the substrate 10 to which the catalyst layer 20 has not been applied, and the main elements of the substrate 10 are analyzed. The components derived from the substrate 10 are subtracted from the components of the upstream region. This makes it possible to obtain the $CeO_2$ ratio and $Al_2O_3$ ratio of the catalyst layer 20 in the upstream region from which the components of the substrate 10 were excluded. By multiplying the weight W (g) of the upstream region used for the measurement by the $CeO_2$ ratio of the catalyst layer 20, the total $CeO_2$ weight M (g) of the lower-layer front portion A and the upper-layer front portion C can be calculated. Also, the total $Al_2O_3$ weight N (g) of the lower-layer front portion A and the upper-layer front portion C can be calculated according to the same procedure.

Next, an element map of the upstream region is acquired by performing EPMA on the cross section of the upstream region along the cylinder axis direction. Using a predetermined image analysis software (such as Image-J), the lower-layer front portion A on the element map is analyzed, and the ratio ($Ce_A$/$Al_A$) of the Ce amount to the Al amount in the lower-layer front portion A is calculated. Next, the upper-layer front portion C is analyzed and the ratio ($Ce_C$/$Al_C$) of the Ce amount to the Al amount in the upper-layer front portion C is calculated. Hereinafter, the calculated $Ce_A$/$Al_A$ is designated as "a" and the calculated Cec/Alc is designated as "c".

It is assumed that the total amount of $Al_2O_3$ and $CeO_2$ in the lower-layer front portion A is "X", and the total amount of $Al_2O_3$ and $CeO_2$ in the upper-layer front portion C is "Y". In this case, the "total $CeO_2$ weight M of the lower-layer front portion A and the upper-layer front portion C" and the "total $Al_2O_3$ weight N of the lower-layer front portion A and the upper-layer front portion C" measured by ICP are expressed by the following formulas (4) and (5).

$$X + Y = M + N \qquad (4)$$

$$aX + cY = M \qquad (5)$$

Because M, N, a, and c in the above (4) and formula (5) have already been measured, the total amount X of the $Al_2O_3$ amount and the $CeO_2$ amount in the lower-layer front portion A and the total amount Y of the $Al_2O_3$ amount and the $CeO_2$ amount in the upper-layer front portion C can be calculated by solving the simultaneous equations. Then, by multiplying X and a, the $CeO_2$ weight (g) of the lower-layer front portion A can be calculated. Meanwhile, by multiplying Y and c, the $CeO_2$ weight (g) of the upper-layer front portion C can be calculated. By dividing each calculation result by the volume (L) of the upstream measurement sample, the "$CeO_2$ content $A_{CeO2}$ (g/L) in the lower-layer front portion A" and the "$CeO_2$ content $C_{CeO2}$ (g/L) in the upper-layer front portion C" can be calculated.

(2) $CeO_2$ Content $B_{CeO2}$ in Lower-Layer Rear Portion B

Next, the lower-layer rear portion B is a region easily responding to fluctuations in the air-fuel ratio due to fuel cut (F/C) etc. Specifically, various exhaust gases such as exhaust gas during warm-up operation and exhaust gas during normal operation are supplied to the lower-layer rear portion B located on the downstream side of the lower catalyst layer 22. For this reason, by imparting a high oxygen storage capacity to the lower-layer rear portion B, it is possible to construct an exhaust gas purification catalyst that can easily respond to fluctuations in the air-fuel ratio of the exhaust gas. From this viewpoint, it is preferable to set the $CeO_2$ content $B_{CeO2}$ in the lower-layer rear portion B to 20 g/L or more. This allows the lower-layer rear portion B to have a high oxygen storage capacity, so that suitable exhaust gas purification performance can be exhibited even if the air-fuel ratio fluctuates. The $CeO_2$ content $B_{CeO2}$ in the lower-layer rear portion B is more preferably 22 g/L or more, even more preferably 23 g/L or more, and particularly preferably 24 g/L or more. This allows the lower-layer rear portion B to have a more suitable oxygen storage capacity.

Meanwhile, when the $CeO_2$ content $B_{CeO2}$ in the lower-layer rear portion B reaches a certain level or more, the oxygen storage capacity of the lower-layer rear portion B becomes saturated. From this viewpoint, the $CeO_2$ content $B_{CeO2}$ in the lower-layer rear portion B is preferably 63 g/L or less. As a result, the contents of other components (catalytic metal, support material, etc.) in the lower-layer rear portion B can be sufficiently ensured. The $CeO_2$ content $B_{CeO2}$ in the lower-layer rear portion B is preferably 50 g/L or less, more preferably 40 g/L or less, even more preferably 30 g/L or less, and particularly preferably 28 g/L or less.

In the present specification, the "$CeO_2$ content $B_{CeO2}$ in the lower-layer rear portion B" refers to the weight of $CeO_2$ contained in the lower-layer rear portion B when the substrate volume $V_B$ of the region in which the lower-layer rear portion B is present is assumed to be 1 L. This "$CeO_2$ content $B_{CeO2}$ in the lower-layer rear portion B" is measured using ICP and EPMA, similarly to the above-mentioned "$CeO_2$ content $A_{CeO2}$ in the lower-layer front portion A". When measuring the $CeO_2$ content of each of the lower-layer rear portion B and the upper-layer rear portion D, first, the downstream region including only the lower-layer rear portion B and the upper-layer rear portion D (i.e., the region downstream of the upper-layer lap portion 27 in Fig. 4) is initially cut out from the exhaust gas purification catalyst 1.

(3) $CeO_2$ Content $C_{CeO2}$ in Upper-Layer Front Portion C

As described above, the upper-layer front portion C contains Rh as a catalytic metal. This can promote the water-gas shift reaction and improve the purification performance of the entire catalyst. Meanwhile, Rh has a problem in that the catalytic activity thereof is greatly reduced upon oxidation. Therefore, where the recovery of catalytic activity due to warm-up operation is delayed, the amount of $H_2$ generated in the upper-layer front portion C may be greatly reduced, and $NO_X$ emissions may increase. For this reason, it is preferable to set the $CeO_2$ content $C_{CeO2}$ in the upper-layer front portion C to 7 g/L or less. As described above, by reducing the amount of $CeO_2$ around the catalytic metal, the supply of oxygen from $CeO_2$ during warm-up operation can be suppressed, and the catalytic activity of Rh can be recovered early. This ensures the amount of $H_2$ generated in the upper-layer front portion C during warm-up operation and reduces $NO_X$ emissions. From the viewpoint of further suppressing $NO_X$ emissions during warm-up operation, the $CeO_2$ content $C_{CeO2}$ in the upper-layer front portion C is more preferably 6.5 g/L or less, and particularly preferably 6 g/L or less.

Meanwhile, where the $CeO_2$ content $C_{CeO2}$ in the upper-layer front portion C becomes too low, it will not be possible to respond to rapid fluctuations in the air-fuel ratio of the exhaust gas in a short period, and there is a risk that $NO_X$ emissions during warm-up operation will actually increase. For this reason, it is preferable to set the lower limit of the $CeO_2$ content $C_{CeO2}$ in the upper-layer front portion C to 1 g/L or more. From the viewpoint of further suppressing $NO_X$ emissions during warm-up operation, the $CeO_2$ content $C_{CeO2}$ in the upper-layer front portion C is more preferably 2 g/L or more, even more preferably 2.5 g/L or more, and particularly preferably 3 g/L or more.

In addition, in the present specification, the "$CeO_2$ content $C_{CeO2}$ in the upper-layer front portion C" refers to the weight of $CeO_2$ contained in the upper-layer front portion C when the substrate volume $V_C$ of the region in which the upper-layer front portion C is present is assumed to be 1 L. This "$CeO_2$ content $C_{CeO2}$ in the upper-layer front portion C" can be measured using ICP and EPMA, as described above.

(4) $CeO_2$ Content $D_{CeO2}$ in Upper-Layer Rear Portion D

As described above, the upper-layer rear portion D disclosed herein contains Rh as a catalytic metal. This can improve the exhaust gas purification performance during high-speed operation. Meanwhile, since rhodium oxide is highly reactive with ceria, it may form a solid solution in ceria when exposed to a high-temperature environment, resulting in a significant decrease in catalytic activity. In particular, the exhaust gas during high-speed operation has a very high temperature, which may promote the formation of solid solution of rhodium oxide and ceria. Therefore, it is preferable that the $CeO_2$ content $D_{CeO2}$ in the upper-layer rear portion D be set to 8 g/L or less. This reduces the amount of $CeO_2$ present around Rh and suppresses the formation of a solid solution of rhodium oxide and ceria. As a result, exhaust gas during high-speed operation can be suitably purified. From the viewpoint of more suitably purifying exhaust gas during high-speed operation, the $CeO_2$ content $D_{CeO2}$ in the upper-layer rear portion D is preferably 7.5 g/L or less, and particularly preferably 7 g/L or less.

Meanwhile, where the $CeO_2$ content $D_{CeO2}$ in the upper-layer rear portion D becomes too low, it will not be possible to respond to rapid fluctuations in the air-fuel ratio of the exhaust gas in a short period, and there is a risk that $NO_X$ emissions during warm-up operation will actually increase. Therefore, it is preferable that the lower limit of the $CeO_2$ content $D_{CeO2}$ in the upper-layer rear portion D be set to 2 g/L or more. From the viewpoint of more suitably suppressing $NO_X$ emissions during high-speed operation, the $CeO_2$ content $D_{CeO2}$ in the upper-layer rear portion D is more preferably 2.5 g/L or more, even more preferably 3 g/L or more, and particularly preferably 3.5 g/L or more.

In addition, in the present specification, the "$CeO_2$ content $D_{CeO2}$ in the upper-layer rear portion D" refers to the weight of $CeO_2$ contained in the upper-layer rear portion D when the substrate volume $V_D$ of the region in which the upper-layer rear portion D is present is assumed to be 1 L. This "$CeO_2$ content $D_{CeO2}$ in the upper-layer rear portion D" can be measured by using ICP and EPMA, similarly to the above "$CeO_2$ content $A_{CeO2}$ in the lower-layer front portion A".

The $CeO_2$ content $D_{CeO2}$ in the upper-layer rear portion D is preferably greater than the $CeO_2$ content $C_{CeO2}$ in the upper-layer front portion C. More specifically, the ratio ($C_{CeO2}/D_{CeO2}$) of the $CeO_2$ content $C_{CeO2}$ in the upper-layer front portion C to the $CeO_2$ content $D_{CeO2}$ in the upper-layer rear portion D is preferably 1.0 or less, more preferably 0.75 or less, and even more preferably 0.7 or less. This makes it easier to respond to the fluctuations in the air-fuel ratio during high-load operation in which high-velocity exhaust gas is supplied. As a result, the purification performance for harmful components that could not be sufficiently purified by the upper-layer front portion C is improved, and the emission of harmful components during high-load operation can be suitably reduced. Meanwhile, the lower limit of the $C_{CeO2}/D_{CeO2}$ is not particularly limited, and may be 0.1 or more, 0.2 or more, 0.4 or more, or 0.5 or more.

2. Other Modification Examples

For example, the catalyst layer 20 of the exhaust gas purification catalyst 1 according to the embodiment described above is composed of only the lower catalyst layer 22 and the upper catalyst layer 24. However, the catalyst layer of the exhaust gas purification catalyst disclosed herein may have a stacked structure of at least two layers including a lower catalyst layer and an upper catalyst layer. In other words, the exhaust gas purification catalyst disclosed herein is inclusive of a form in which other catalyst layers are provided between the partition wall 14 and the lower catalyst layer 22 in Fig. 4, between the lower catalyst layer 22 and the upper catalyst layer 24, on the surface of the upper catalyst layer 24, etc. In addition, where such three or more catalyst layers are included, the one closer to the surface of the partition wall is the lower catalyst layer, and the one relatively farther is the upper catalyst layer.

[Test Examples]

Below, test examples related to the technique disclosed herein are explained. The following test examples are not intended to limit the technique disclosed herein to the contents described hereinbelow.

<First Test>

In this test, six types of exhaust gas purification catalysts (Examples 1 to 6) with different positions of the upper-layer lap portion were prepared, and the exhaust gas purification performance of each example was evaluated.

1. Preparation of Each Example

(1) Example 1

In Example 1, four types of slurries (slurry for lower-layer front portion A, slurry for lower-layer rear portion B, slurry for upper-layer front portion C, and slurry for upper-layer rear portion D) were prepared. The slurry for the lower-layer front portion A was prepared by mixing Pd nitrate (Pd content: 2.0 g), $CeO_2$-$ZrO_2$ composite oxide ($CeO_2$ content: 10 g) with a $CeO_2$ content of 40%, $Al_2O_3$ powder (80 g), and an aqueous solvent. The slurry for the lower-layer rear portion B was prepared with the same composition as the slurry for the lower-layer front portion A. Next, the slurry for the upper-layer front portion C was prepared by mixing Rh nitrate (Rh content: 0.2 g), $CeO_2$-$ZrO_2$ composite oxide ($CeO_2$ content: 4.8 g) with a $CeO_2$ content of 20%, $Al_2O_3$ powder (60 g), and an aqueous solvent. The slurry for the upper-layer rear portion D was prepared with the same composition as the slurry for the upper-layer front portion C.

Next, a cylindrical straight-flow type honeycomb substrate (diameter: 118.4 mm, length L in the cylinder axis direction: 114.3 mm, volume: 1.26 L) was prepared as the substrate. A catalyst layer having a lower-layer front portion A, a lower-layer rear portion B, an upper-layer front portion C, and an upper-layer rear portion D was formed according to the procedure described in the [Method for Manufacturing Exhaust Gas Purification Catalyst] hereinabove.

In Example 1, the length of the lower-layer front portion A was set to 50% of the entire length of the partition wall (100%), and the length of the lower-layer rear portion B was set to 50%. Furthermore, the length of the upper-layer front portion C was set to 90%, and the length of the upper-layer rear portion D was set to 30%. As a result, in Example 1, an upper-layer lap portion (lap width 20%) was formed with the center thereof located at a position 80% from the upstream side of the substrate.

(2) Examples 2 to 6

In Examples 2 to 6, exhaust gas purification catalysts were prepared using the same procedure as in Example 1, except that the lengths of the upper-layer front portion C and upper-layer rear portion D were changed. The lengths of the upper-layer front portion C and upper-layer rear portion D, the center position of the upper-layer lap portion, and the width of the upper-layer lap portion in each example are shown in Table 1.

2. Evaluation Test

(1) Durability Test

In this test, an accelerated durability test equivalent to 120,000 km was performed on each example of the exhaust gas purification catalyst. Specifically, each example of the exhaust gas purification catalyst was mounted on an engine bench with a displacement of 4.8 L. Then, the engine was operated and the catalyst bed temperature was maintained at 1000°C for 50 h.

(2) Exhaust Gas Purification Performance Evaluation

Next, the exhaust gas purification performance of the exhaust gas purification catalyst after the durability test was evaluated. Specifically, exhaust gas heated from 150°C to 450°C at a heating rate of 20°C/min was supplied while measuring the HC concentration on the upstream and downstream sides of the exhaust gas purification catalyst after the durability test. Then, the temperature at which the HC concentration on the downstream side became 50% or less of the HC concentration on the upstream side (50% HC purification temperature (°C)) was measured. The results are shown in Table 1 and Fig. 5. In addition, the air-fuel ratio (AFR) of the exhaust gas in this test was set so that $\lambda$ (the ratio of oxidizing gas components to reducing gas components) was 1 (stoichiometric).

[Table 1]

Table 1

| | Coat width (%) | | | | Position of upper-layer lap portion (%) | Width of upper-layer lap portion (%) | 50% HC purification temperature (°C) |
|---|---|---|---|---|---|---|---|
| | Lower-layer front portion A | Lower-layer rear portion B | Upper-layer front portion C | Upper-layer rear portion D | | | |
| Example1 | 50 | 50 | 90 | 30 | 80 | 20 | 389.0 |
| Example2 | 50 | 50 | 80 | 40 | 70 | 20 | 387.4 |
| Example3 | 50 | 50 | 70 | 50 | 60 | 20 | 385.0 |
| Example4 | 50 | 50 | 60 | 60 | 50 | 20 | 385.8 |
| Example5 | 50 | 50 | 50 | 70 | 40 | 20 | 387.4 |
| Example6 | 50 | 50 | 60 | 40 | - | - | 390.4 |

As shown in Table 1 and Fig. 5, this test confirmed that the 50% HC purification time tends to be shorter in exhaust gas purification catalysts (Examples 1 to 5) that have the upper-layer lap portion. In addition, as shown in Examples 2 to 5, it was confirmed that the exhaust gas purification performance is further improved when the center of the upper-layer lap portion is located within a range of 40% to 70% from the upstream end of the substrate. This is presumably because the upper-layer lap portion is formed relatively downstream, resulting in efficient purification of exhaust gas with a high flow velocity.

<Second Test>

In this test, four types of exhaust gas purification catalysts (Examples 7 to 10) with different positions of the lower-layer lap portion and the upper-layer lap portion were prepared, and the pressure loss of each example was evaluated.

1. Preparation of Each Example

In Examples 7 to 10 of the second test, exhaust gas purification catalysts were prepared according to the same procedure as in Example 1 of the first test, except that the length of each region (lower-layer front portion A to upper-layer rear portion D) was changed. In other words, in Examples 7 to 10, slurries of the same composition as in the first test were used, and only the regions to which each slurry was applied were changed. The length of each region, the region in which the lower-layer lap portion was formed, and the region in which the upper-layer lap portion was formed in Examples 7 to 10 are shown in Table 2.

2. Evaluation Tests

(1) Durability Test

An accelerated durability test equivalent to 120,000 km was conducted on the exhaust gas purification catalysts of each example according to the same procedure as in the first test.

(2) Pressure Loss Evaluation Test

Air at 25°C was flowed at a flow rate of 10 $m^3$/min into the exhaust gas purification catalysts (after PM accumulation) after the durability test. Then, the pressures on the upstream side and downstream side of the exhaust gas purification catalyst were measured, and the pressure loss value (kPa) was calculated. The results are shown in Table 2. The pressure loss shown in Table 2 is a relative value (pressure loss ratio) when the pressure loss value of Example 10 is taken as 100%.

[Table 2]

Table 2

| | Coat width (%) | | | | Formation position of lower-layer lap portion (%) | Formation position of upper-layer lap portion (%) | Overlapping of lap portions | Pressure loss (%) |
|---|---|---|---|---|---|---|---|---|
| | Lower-layer front portion A | Lower-layer rear portion B | Upper-layer front portion C | Upper-layer rear portion D | | | | |
| Example 7 | 45 | 75 | 75 | 45 | 25-45 | 55-75 | no-overlapping | 93.1 |
| Example 8 | 55 | 65 | 75 | 45 | 35-55 | 55-75 | no-overlapping | 94.2 |
| Example 9 | 65 | 55 | 75 | 45 | 45-65 | 55-75 | some overlap | 99.1 |
| Example 10 | 75 | 45 | 75 | 75 | 55-75 | 55-75 | match | 100.0 |

As shown in Table 2, in Examples 7 and 8, the pressure loss after the durability test was significantly lower than in Examples 9 and 10. This is presumably because the formation positions of the upper-layer lap portion and the lower-layer lap portion were made different, which prevented the formation of a region where the thickness of the catalyst layer was locally increased, and ensured a sufficient opening area of the cells.

<Third Test>

In this test, six types of exhaust gas purification catalysts (Examples 11 to 16) with different $CeO_2$ contents $A_{CeO2}$ in the lower-layer front portion A were produced, and the warm-up performance of each example was evaluated.

1. Preparation of Each Example

(1) Example 11

In Example 11 of the third test, an exhaust gas purification catalyst was prepared according to the same procedure as in Example 6 of the first test (without lap portions), except that the components of each slurry (lower-layer front portion A to upper-layer rear portion D) were changed.

Specifically, the slurry for the lower-layer front portion A of Example 11 was prepared by mixing Pd nitrate (Pd content: 5.3 g), $Al_2O_3$ powder (40 g), and an aqueous solvent. The slurry for the lower-layer rear portion B was a mixture of Pd nitrate (Pd content: 2.6 g), $CeO_2$-$ZrO_2$ composite oxide ($CeO_2$ content: 22 g) with a $CeO_2$ content of 40%, $Al_2O_3$ powder (50 g), and an aqueous solvent. The slurry for the upper-layer front portion C was a mixture of Rh nitrate (Rh content: 0.2 g), $CeO_2$-$ZrO_2$ composite oxide ($CeO_2$ content: 2.1 g) with a $CeO_2$ content of 20%, $Al_2O_3$ powder (90 g), and an aqueous solvent. The slurry for the upper-layer rear portion D was a mixture of Rh nitrate (Rh content: 0.2 g), $CeO_2$-$ZrO_2$ composite oxide with a $CeO_2$ content of 20% ($CeO_2$ content: 2.1 g), $Al_2O_3$ powder (90 g), and an aqueous solvent.

(2) Examples 12 to 16

In Examples 12 to 16, the exhaust gas purification catalysts were produced in the same manner as in Example 11, except that the $CeO_2$ content $A_{CeO2}$ in the lower-layer front portion A was changed as shown in Table 3. Specifically, in Examples 12 to 16, a $CeO_2$-$ZrO_2$ composite oxide with a $CeO_2$ content of 40% was added to the slurry for the lower-layer front portion A so that the $CeO_2$ content $A_{CeO2}$ was as shown in Table 3. In the slurries for the lower-layer front portion A in Examples 12 to 16, the amount of $Al_2O_3$ powder added was reduced by the amount of $CeO_2$-$ZrO_2$ composite oxide added.

2. Evaluation Tests

(1) Durability Test

An accelerated durability test equivalent to 120,000 km was conducted on the exhaust gas purification catalysts of each example according to the same procedure as in the first test.

(2) Evaluation of Warm-up Performance

Next, the warm-up performance of the exhaust gas purification catalyst after the durability test was evaluated. Specifically, air was supplied to the exhaust gas purification catalyst after the durability test to cool it to 50°C. Then, exhaust gas at 450°C was supplied while measuring the HC concentration on the upstream and downstream sides of the exhaust gas purification catalyst, and the time until the HC concentration on the downstream side became 50% or less of the HC concentration on the upstream side (50% HC purification time (sec)) was measured. The results are shown in Table 3 and Fig. 6. In addition, the air-fuel ratio (AFR) of the exhaust gas in this test was set so that λ was 1 (stoichiometric).

[Table 3]

Table 3

| | | Catalytic metal amount (g/L) | | | | CeO$_2$ content (g/L) | | | | 50% HC purification time (sec) |
|---|---|---|---|---|---|---|---|---|---|---|
| | | Lower-layer front portion A (Pd) | Lower-layer rear portion B (Pd) | Upper-layer front portion C (Rh) | Upper-layer rear portion D (Rh) | Lower-layer front portion A | Lower-layer rear portion B | Upper-layer front portion C | Upper-layer rear portion D | |
| | Example 11 | 5.3 | 2.6 | 0.2 | 0.2 | 0 | 22 | 2.1 | 2.1 | 17.8 |
| | Example 12 | 5.3 | 2.6 | 0.2 | 0.2 | 6 | 22 | 2.1 | 2.1 | 17.7 |
| | Example 13 | 5.3 | 2.6 | 0.2 | 0.2 | 12 | 22 | 2.1 | 2.1 | 17.9 |
| | Example 14 | 5.3 | 2.6 | 0.2 | 0.2 | 15 | 22 | 2.1 | 2.1 | 18.2 |
| | Example 15 | 5.3 | 2.6 | 0.2 | 0.2 | 18 | 22 | 2.1 | 2.1 | 18.4 |
| | Example 16 | 5.3 | 2.6 | 0.2 | 0.2 | 24 | 22 | 2.1 | 2.1 | 18.4 |

As shown in Table 3 and Fig. 6, this test confirmed a tendency that the 50% HC purification time becomes shorter as the CeO$_2$ content $A_{CeO2}$ in the lower-layer front portion A decreases. This is presumably because the oxygen supply from CeO$_2$ during warm-up is suppressed, which promotes the recovery of the purification performance of the catalytic metal (Pd) in the lower-layer front portion A.

<Fourth Test>

In this test, four types of exhaust gas purification catalysts (Examples 17 to 20) with different CeO$_2$ contents $B_{CeO2}$ in the lower-layer rear portion B were prepared, and the oxygen storage ability of each was evaluated.

1. Preparation of Each Example

(1) Example 17

In Example 17 of the fourth test, an exhaust gas purification catalyst was prepared according to the same procedure as in Example 11 of the third test, except that the components of each slurry (lower-layer front portion A to upper-layer rear portion D) were changed.

Specifically, the slurry for the lower-layer front portion A of Example 17 was obtained by mixing Pd nitrate (Pd content: 2.8 g), CeO$_2$-ZrO$_2$ composite oxide with a CeO$_2$ content of 40% (CeO$_2$ content: 15 g), Al$_2$O$_3$ powder (70 g), and an aqueous solvent. The slurry for the lower-layer rear portion B was obtained by mixing Pd nitrate (Pd content: 0.8 g), CeO$_2$-ZrO$_2$ composite oxide with a CeO$_2$ content of 40% (CeO$_2$ content: 28 g), Al$_2$O$_3$ powder (40 g), and an aqueous solvent. Next, the slurry for the upper-layer front portion C was obtained by mixing a Rh nitrate solution (Rh content: 0.2 g), CeO$_2$-ZrO$_2$ composite oxide (CeO$_2$ content: 6 g) with a CeO$_2$ content of 20%, Al$_2$O$_3$ powder (80 g), and an aqueous solvent. The slurry for the upper-layer rear portion D was obtained by mixing a Rh nitrate solution (Rh content: 0.2 g), CeO$_2$-ZrO$_2$ composite oxide (CeO$_2$ content: 6 g) with a CeO$_2$ content of 20%, Al$_2$O$_3$ powder (80 g), and an aqueous solvent.

(2) Examples 18 to 20

In Examples 18 to 20, the exhaust gas purification catalysts were produced in the same manner as in Example 17, except that the CeO$_2$ content $B_{CeO2}$ in the lower-layer rear portion B was changed as shown in Table 4. The procedure for adjusting the CeO$_2$ content $B_{CeO2}$ in Examples 18 to 20 is the same as the procedure for adjusting the CeO$_2$ content $A_{CeO2}$ in Examples 12 to 16 of the third test, so a duplicated explanation will be omitted.

2. Evaluation Tests

(1) Durability Test

An accelerated durability test equivalent to 120,000 km was conducted on the exhaust gas purification catalysts of each example according to the same procedure as in the first test.

(2) Air-Fuel Ratio Fluctuation Test

In this test, first, an $O_2$ sensor was attached downstream of the exhaust gas purification catalyst after the durability test. Next, exhaust gas was supplied from the engine bench while the temperature of the exhaust gas purification catalyst was maintained at 500°C. When the output voltage of the $O_2$ sensor was 0.5 V or higher, it was determined that the inside of the exhaust gas purification catalyst was filled with rich gas, and lean gas with a λ of 1.035 was supplied. Meanwhile, when the output voltage of the $O_2$ sensor was less than 0.5 V, it was determined that the inside of the exhaust gas purification catalyst was filled with lean gas, and rich gas with a λ of 0.965 was supplied. This air-fuel ratio fluctuation test was continued for 5 min while measuring the $NO_X$ concentration on the upstream and downstream sides. The $NO_X$ purification rate during the test was calculated based on the measurement results of the $NO_X$ concentration. The results are shown in Table 4.

[Table 4]

Table 4

| | Catalytic metal amount (g/L) | | | | $CeO_2$ content (g/L) | | | | $NO_X$ purification rate during AFR fluctuations (%) |
|---|---|---|---|---|---|---|---|---|---|
| | Lower-layer front portion A (Pd) | Lower-layer rear portion B (Pd) | Upper-layer front portion C (Rh) | Upper-layer rear portion D (Rh) | Lower-layer front portion A | Lower-layer rear portion B | Upper-layer front portion C | Upper-layer rear portion D | |
| Example 17 | 2.8 | 0.8 | 0.2 | 0.2 | 15 | 28 | 6 | 6 | 87.4 |
| Example 18 | 2.8 | 0.8 | 0.2 | 0.2 | 15 | 24 | 6 | 6 | 86.1 |
| Example 19 | 2.8 | 0.8 | 0.2 | 0.2 | 15 | 20 | 6 | 6 | 85.8 |
| Example 20 | 2.8 | 0.8 | 0.2 | 0.2 | 15 | 12 | 6 | 6 | 83.6 |

As shown in Table 4 and Fig. 7, this test confirmed a tendency that the $NO_X$ purification rate at the time of air-fuel ratio fluctuations improves as the $CeO_2$ content $B_{CeO2}$ in the lower-layer rear portion B increases. This is presumably because high oxygen storage capacity is imparted to the lower-layer rear portion B, which is likely to be supplied with exhaust gas from various operation states.

<Fifth Test>

In this test, four types of exhaust gas purification catalysts (Examples 21 to 24) with different $CeO_2$ contents $C_{CeO2}$ in the upper-layer front portion C were produced, and the $NO_X$ purification performance during warm-up operation was evaluated.

1. Preparation of Each Example

(1) Example 21

In Example 21 of the fifth test, an exhaust gas purification catalyst was produced according to the same procedure as in Example 11 of the third test, except that the components of each slurry (lower-layer front portion A to upper-layer rear portion D) were changed.

Specifically, the slurry for the lower-layer front portion A of Example 21 was obtained by mixing Pd nitrate (Pd content: 3.4 g), $CeO_2$-$ZrO_2$ composite oxide with a $CeO_2$ content of 40% ($CeO_2$ content: 8 g), $Al_2O_3$ powder (40 g), and an aqueous solvent. The slurry for the lower-layer rear portion B was obtained by mixing Pd nitrate (Pd content: 3.4 g), $CeO_2$-$ZrO_2$ composite oxide with a $CeO_2$ content of 40% ($CeO_2$ content: 22 g), $Al_2O_3$ powder (55 g), and an aqueous solvent. Next, the slurry for the upper-layer front portion C was obtained by mixing Rh nitrate (Rh content: 0.3 g), $CeO_2$-$ZrO_2$ composite oxide ($CeO_2$ content: 3 g) with a $CeO_2$ content of 20%, $Al_2O_3$ powder (75 g), and an aqueous solvent. The slurry for the upper-layer rear portion D was obtained by mixing Rh nitrate (Rh content: 0.3 g), $CeO_2$-$ZrO_2$ composite oxide ($CeO_2$ content: 3 g) with a $CeO_2$ content of 20%, $Al_2O_3$ powder (75 g), and an aqueous solvent.

(2) Examples 22 to 24

In Examples 22 to 24, the exhaust gas purification catalysts were produced in the same manner as in Example 21, except that the $CeO_2$ content $C_{CeO2}$ in the upper-layer front portion C was changed as shown in Table 5. The procedure for adjusting the $CeO_2$ content $C_{CeO2}$ in Examples 22 to 24 was the same as the procedure for adjusting the $CeO_2$ content $A_{CeO2}$ in Examples 12 to 16 of the third test, so a duplicated explanation will be omitted.

2. Evaluation Tests

(1) Durability Test

An accelerated durability test equivalent to 120,000 km was conducted on the exhaust gas purification catalysts of each example according to the same procedure as in the first test.

(2) Warm-up Performance Evaluation

In this test, the $NO_X$ purification performance during warm-up operation was evaluated for the exhaust gas purification catalysts after the durability test. Specifically, air was supplied to the exhaust gas purification catalyst after the durability test to cool the catalyst down to 200°C. After that, the temperature of the exhaust gas was raised to 500°C at a heating rate of 10°C/min while measuring the $NO_X$ concentration on the upstream and downstream sides of the exhaust gas purification catalyst. Then, the temperature at which the $NO_X$ purification rate became 50% (50% $NO_X$ purification temperature (°C)) was measured. The results are shown in Table 5 and Fig. 8. In this test, the air-fuel ratio of the exhaust gas was set to stoichiometric ($\lambda$ = 1).

[Table 5]

Table 5

| | Catalytic metal amount (g/L) | | | | $CeO_2$ content (g/L) | | | | 50% $NO_X$ purification temperature (°C) |
|---|---|---|---|---|---|---|---|---|---|
| | Lower-layer front portion A (Pd) | Lower-layer rear portion B (Pd) | Upper-layer front portion C (Rh) | Upper-layer rear portion D (Rh) | Lower-layer front portion A | Lower-layer rear portion B | Upper-layer front portion C | Upper-layer rear portion D | |
| Example 21 | 3.4 | 3.4 | 0.3 | 0.3 | 8 | 22 | 2.9 | 2.9 | 319 |
| Example 22 | 3.4 | 3.4 | 0.3 | 0.3 | 8 | 22 | 5.9 | 2.9 | 323 |
| Example 23 | 3.4 | 3.4 | 0.3 | 0.3 | 8 | 22 | 0 | 2.9 | 334 |
| Example 24 | 3.4 | 3.4 | 0.3 | 0.3 | 8 | 22 | 8.8 | 2.9 | 338 |

As shown in Table 5 and Fig. 8, the 50% HC purification temperature of Example 22 was significantly lower than that of Example 24. This shows that when the $CeO_2$ content $C_{CeO2}$ in the upper-layer front portion C increases, the $NO_X$ purification performance during warm-up operation decreases. This is presumably because the oxygen supply from $CeO_2$ inhibits the recovery of the catalytic activity of Rh, making it difficult for the water-gas shift reaction to occur in the upper-layer front portion C. Meanwhile, when comparing Example 21 and Example 23, the 50% HC purification temperature of Example 21 was significantly lower. Thus, it was understood that the warm-up performance is significantly improved when $CeO_2$ is present at a certain level or higher in the upper-layer front portion C. This is presumably because, even when the air-fuel ratio of the exhaust gas is controlled to be stoichiometric, the actual air-fuel ratio fluctuates finely between the rich side and the lean side, and the presence of a very small amount of $CeO_2$ in the upper-layer front portion C makes it possible to respond to such fine air-fuel ratio fluctuations.

<Sixth Test>

In this test, four types of exhaust gas purification catalysts (Examples 25 to 28) with different $CeO_2$ contents $D_{CeO2}$ in the upper-layer rear portion D were prepared, and the exhaust gas purification performance during high-speed operation was evaluated.

1. Preparation of Each Example

(1) Example 25

In Example 25 of the sixth test, an exhaust gas purification catalyst was prepared according to the same procedure as in Example 11 of the third test, except that the components of each slurry (lower-layer front portion A to upper-layer rear portion D) were changed.

Specifically, the slurry for the lower-layer front portion A of Example 25 was obtained by mixing Pd nitrate (Pd content: 3.4 g), $CeO_2$-$ZrO_2$ composite oxide with a $CeO_2$ content of 40% ($CeO_2$ content: 8 g), $Al_2O_3$ powder (40 g), and an aqueous solvent. The slurry for the lower-layer rear portion B was obtained by mixing Pd nitrate (Pd content: 3.4 g), $CeO_2$-$ZrO_2$ composite oxide ($CeO_2$ content: 22 g) having a $CeO_2$ content of 40%, $Al_2O_3$ powder (55 g), and an aqueous solvent. The slurry for the upper-layer front portion C was obtained by mixing a Rh nitrate solution (Rh content: 0.3 g), $CeO_2$-$ZrO_2$ composite oxide ($CeO_2$ content: 3 g) having a $CeO_2$ content of 20%, $Al_2O_3$ powder (75 g), and an aqueous solvent. The slurry for the upper-layer rear portion D was obtained by mixing Rh nitrate solution (Rh content: 0.3 g), $CeO_2$-$ZrO_2$ composite oxide ($CeO_2$ content: 3 g) having a $CeO_2$ content of 20%, $Al_2O_3$ powder (75 g), and an aqueous solvent.

(2) Examples 26 to 28

In Examples 26 to 28, the exhaust gas purification catalysts were produced in the same manner as in Example 25, except that the $CeO_2$ content $D_{CeO2}$ in the upper-layer rear portion D was changed as shown in Table 6.

2. Evaluation Tests

(1) Durability Test

An accelerated durability test equivalent to 120,000 km was conducted on the exhaust gas purification catalysts of each example according to the same procedure as in the first test.

(2) High-Speed Operation Evaluation

In this test, the $NO_X$ purification performance during high-speed operation was evaluated for the exhaust gas purification catalyst after the durability test. Specifically, the exhaust gas purification catalyst of each example was mounted on a 1.5 L turbo vehicle, and the vehicle was actually driven in a WLTC mode. Then, the $NO_X$ emission amount (mg/km) in the extra-urban zone (average speed: 62.6 km/h, maximum speed: 120 km/h) was measured, assuming that this was the $NO_X$ emission amount during high-speed operation. The results are shown in Table 6 and Fig. 9.

[Table 6]

Table 6

| | Catalytic metal amount (g/L) | | | | CeO$_2$ content (g/L) | | | | NO$_X$ emission amount (mg/km) during high-speed operation |
|---|---|---|---|---|---|---|---|---|---|
| | Lower-layer front portion A (Pd) | Lower-layer rear portion B (Pd) | Upper-layer front portion C (Rh) | Upper-layer rear portion D (Rh) | Lower-layer front portion A | Lower-layer rear portion B | Upper-layer front portion C | Upper-layer rear portion D | |
| Example 25 | 3.4 | 3.4 | 0.3 | 0.3 | 8 | 22 | 2.9 | 2.9 | 14.6 |
| Example 26 | 3.4 | 3.4 | 0.3 | 0.3 | 8 | 22 | 2.9 | 5.9 | 11.9 |
| Example 27 | 3.4 | 3.4 | 0.3 | 0.3 | 8 | 22 | 2.9 | 0 | 27.4 |
| Example 28 | 3.4 | 3.4 | 0.3 | 0.3 | 8 | 22 | 2.9 | 8.8 | 24.0 |

As shown in Table 6 and Fig. 9, the NOx emission amount during high-speed operation was significantly lower in Example 26 than in Example 28. This shows that reducing the CeO$_2$ content $D_{CeO2}$ in the upper-layer rear portion D improves exhaust gas purification performance during high-speed operation. This is presumably because reducing the amount of CeO$_2$ present around Rh suppresses the formation of a solid solution of Rh and CeO$_2$ due to high-temperature exhaust gas. Meanwhile, when comparing Example 25 and Example 27, the NO$_X$ emission amount in Example 25 was significantly lower. This shows that having a certain amount of CeO$_2$ present in the upper-layer rear portion D improves exhaust gas purification performance during high-speed operation. This is presumably because it becomes possible to respond to rapid fluctuations in the air-fuel ratio of the exhaust gas in a short period.

Although several embodiments of the present invention have been described above, the above embodiments are merely examples. The present invention can be implemented in various other forms. The present invention can be implemented based on the contents disclosed in the present specification and the common technical sense in the pertinent field. The technique set forth in the claims includes various modifications and changes to the embodiments exemplified above. For example, it is possible to replace part of the above-mentioned embodiments with other modified forms, and it is also possible to add other modified forms to the above-mentioned embodiments. Furthermore, where a technical feature is not described as essential, it can be deleted as appropriate.

Industrial Applicability

According to the present invention, it is possible to provide an exhaust gas purification catalyst that can exhibit adequate purification performance according to the operation state of an internal combustion engine.

Reference Signs List

1   Exhaust gas purification catalyst
2   Internal combustion engine
3   Exhaust manifold
4   Exhaust pipe
5   Exhaust path
6   Sensor
7   Engine control unit (ECU)
8   First purification member
9   Second purification member
10   Substrate
12   Cell
20   Catalyst layer

22      Lower catalyst layer
24      Upper catalyst layer
25      Lower-layer lap portion
27      Upper-layer lap portion
A       Lower-layer front portion
B       Lower-layer rear portion
C       Upper-layer front portion
D       Upper-layer rear portion

**Claims**

1.  An exhaust gas purification catalyst placed in an exhaust path connected to an internal combustion engine and purifying exhaust gas discharged from the internal combustion engine, the exhaust gas purification catalyst comprising:

    a cylindrical substrate that has a plurality of cells and a partition wall separating the plurality of cells; and
    a catalyst layer that is a porous layer provided on a surface of the partition wall and has a catalytic metal, wherein
    the catalyst layer has a stacked structure of at least two layers, with a lower catalyst layer thereof being closer to the surface of the partition wall and an upper catalyst layer thereof being relatively farther from the surface of the partition wall,
    the lower catalyst layer has
    a lower-layer front portion A that extends from an upstream end of the substrate in an exhaust gas flow direction toward a downstream side and includes Pd as the catalytic metal, and
    a lower-layer rear portion B that extends from a downstream end of the substrate in the exhaust gas flow direction toward an upstream side and includes at least one of Pd and Pt as the catalytic metal; and
    a lower-layer lap portion in which the lower-layer front portion A and the lower-layer rear portion B are stacked;
    the upper catalyst layer includes
    an upper-layer front portion C that extends from the upstream end of the substrate in the exhaust gas flow direction toward the downstream side and contains Rh as a catalytic metal,
    an upper-layer rear portion D that extends from the downstream end of the substrate in the exhaust gas flow direction toward the upstream side and contains Rh as a catalytic metal, and
    an upper-layer lap portion in which the upper-layer front portion C and the upper-layer rear portion D are stacked; and
    a formation position of the lower-layer lap portion and a formation position of the upper-layer lap portion do not overlap in a cylinder axis direction of the substrate.

2.  The exhaust gas purification catalyst according to claim 1, wherein when an entire length of the partition wall in the cylinder axis direction is taken as 100%, a center of the upper-layer lap portion is located at a position 40% to 70% from the upstream end of the substrate.

3.  The exhaust gas purification catalyst according to claim 1 or 2, wherein when the entire length of the partition wall in the cylinder axis direction is taken as 100%, a center of the lower-layer lap portion is located at a position 35% to 50% from the upstream end of the substrate.

4.  The exhaust gas purification catalyst according to claim 1 or 2, wherein when the entire length of the partition wall in the cylinder axis direction is taken as 100%, a length $L_A$ of the lower-layer front portion A is 45% to 55%.

5.  The exhaust gas purification catalyst according to claim 4, wherein when the entire length of the partition wall in the cylinder axis direction is taken as 100%, a length $L_B$ of the lower-layer rear portion B is 65% to 75%.

6.  The exhaust gas purification catalyst according to claim 5, wherein when the entire length of the partition wall in the cylinder axis direction is taken as 100%, a length $L_C$ of the upper-layer front portion C is 50% to 80%.

7.  The exhaust gas purification catalyst according to claim 6, wherein when the entire length of the partition wall in the cylinder axis direction is taken as 100%, a length $L_D$ of the upper-layer rear portion D is 40% to 70%.

8.  The exhaust gas purification catalyst according to claim 1 or 2, wherein the catalyst layer further has an OSC material including $CeO_2$.

9. The exhaust gas purification catalyst according to claim 8, wherein the OSC material is a $CeO_2$-$ZrO_2$ composite oxide.

10. The exhaust gas purification catalyst according to claim 8, wherein a $CeO_2$ content $A_{CeO2}$ in the lower-layer front portion A is 0 g/L to 15 g/L.

11. The exhaust gas purification catalyst according to claim 8, wherein a $CeO_2$ content $B_{CeO2}$ in the lower-layer rear portion B is 20 g/L to 63 g/L.

12. The exhaust gas purification catalyst according to claim 8, wherein a $CeO_2$ content $C_{CeO2}$ in the upper-layer front portion C is 1 g/L to 8 g/L.

13. The exhaust gas purification catalyst according to claim 8, wherein a $CeO_2$ content $D_{CeO2}$ in the upper-layer rear portion D is 1 g/L to 8 g/L.

FIG.1

<u>1</u>

FIG.2

FIG.3

FIG.4

EP 4 663 294 A1

FIG.5

FIG.6

FIG.7

FIG.8

FIG.9

# EP 4 663 294 A1

## INTERNATIONAL SEARCH REPORT

| | International application No. |
|---|---|
| | **PCT/JP2023/044135** |

### A. CLASSIFICATION OF SUBJECT MATTER

***B01J 35/57***(2024.01)i; ***B01D 53/94***(2006.01)i; ***B01J 23/63***(2006.01)i; ***F01N 3/10***(2006.01)i; ***F01N 3/28***(2006.01)i
FI: B01J35/57 L; B01D53/94 222; B01D53/94 245; B01D53/94 280; B01J23/63 A ZAB; F01N3/10 A; F01N3/28 301P

According to International Patent Classification (IPC) or to both national classification and IPC

### B. FIELDS SEARCHED

Minimum documentation searched (classification system followed by classification symbols)

B01J35/57; B01D53/94; B01J23/63; F01N3/10; F01N3/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-163342 A (CATALER CORP.) 08 October 2020 (2020-10-08)<br>entire text, all drawings | 1-13 |
| A | JP 2022-007587 A (CATALER CORP.) 13 January 2022 (2022-01-13)<br>entire text, all drawings | 1-13 |
| A | JP 2021-154191 A (TOYOTA JIDOSHA KABUSHIKI KAISHA) 07 October 2021 (2021-10-07)<br>entire text, all drawings | 1-13 |
| A | US 2021/0299647 A1 (JOHNSON MATTHEY PUBLIC LIMITED COMPANY) 30 September 2021 (2021-09-30)<br>entire text, all drawings | 1-13 |
| A | JP 2021-104473 A (TOYOTA JIDOSHA KABUSHIKI KAISHA) 26 July 2021 (2021-07-26)<br>entire text, all drawings | 1-13 |

☑ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **11 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2023/044135** |

### C. DOCUMENTS CONSIDERED TO BE RELEVANT

| Category* | Citation of document, with indication, where appropriate, of the relevant passages | Relevant to claim No. |
|---|---|---|
| A | JP 2017-200677 A (MITSUBISHI JIDOSHA KOGYO KABUSHIKI KAISHA) 09 November 2017 (2017-11-09)<br>entire text, all drawings | 1-13 |

Form PCT/ISA/210 (second sheet) (July 2022)

36

## INTERNATIONAL SEARCH REPORT
### Information on patent family members

International application No.

**PCT/JP2023/044135**

| Patent document cited in search report | | | Publication date (day/month/year) | Patent family member(s) | | | Publication date (day/month/year) |
|---|---|---|---|---|---|---|---|
| JP | 2020-163342 | A | 08 October 2020 | US | 2022/0176352 | A1 | |
| | | | | entire text, all drawings | | | |
| | | | | EP | 3950120 | A1 | |
| | | | | CN | 113631261 | A | |
| JP | 2022-007587 | A | 13 January 2022 | EP | 4166229 | A1 | |
| | | | | entire text, all drawings | | | |
| | | | | CN | 115996793 | A | |
| JP | 2021-154191 | A | 07 October 2021 | US | 2021/0301706 | A1 | |
| | | | | entire text, all drawings | | | |
| | | | | EP | 3885030 | A1 | |
| | | | | CN | 113441138 | A | |
| US | 2021/0299647 | A1 | 30 September 2021 | EP | 4126349 | A1 | |
| | | | | entire text, all drawings | | | |
| | | | | CN | 113457662 | A | |
| JP | 2021-104473 | A | 26 July 2021 | US | 2021/0197175 | A1 | |
| | | | | entire text, all drawings | | | |
| | | | | CN | 113042042 | A | |
| JP | 2017-200677 | A | 09 November 2017 | (Family: none) | | | |

Form PCT/ISA/210 (patent family annex) (July 2022)

**Patent documents cited in the description**

- JP 2023031266 A
- JP 7061655 B

- US 20100104491